# EUROPÄISCHE PATENTSCHRIFT

(11) **EP 3 317 172 B1**
(45) Veröffentlichungstag und Bekanntmachung des Hinweises auf die Patenterteilung: **07.04.2021**
(21) Anmeldenummer: 16742183.3
(22) Anmeldetag: 02.07.2016
(51) Int. Cl.: B62K 5/01, B62K 5/027, B62K 5/08, B62K 5/05, B62K 5/10, B62J 17/086

(54) **FAHRZEUG MIT GENEIGTER LENKACHSE**
VEHICLE WITH AN INCLINED STEERING AXIS
VÉHICULE À AXE DE DIRECTION INCLINÉ

(30) Priorität: 02.07.2015 DE 102015008685; 11.12.2015 DE 102015016479; 16.12.2015 DE 202015008753 U
(43) Veröffentlichungstag der Anmeldung: 09.05.2018
(73) Patentinhaber: VIDOLOV, Kliment, 10787 Berlin (DE)
(72) Erfinder: VIDOLOV, Kliment, 10787 Berlin (DE)
(86) Internationale Anmeldenummer: PCT/EP2016/065628
(87) Internationale Veröffentlichungsnummer: WO 2017/001698

(56) Entgegenhaltungen:
- US-A- 3 709 315
- US-A- 4 198 072
- US-A- 4 279 429

## Beschreibung

### Technisches Gebiet

Die Erfindung betrifft ein Fahrzeug mit den Merkmalen des Oberbegriffs des Anspruchs 1 oder 15.

Am Markt existiert eine Vielzahl verschiedener Möglichkeiten Personen zu befördern. Jede der Möglichkeiten richtet sich an eine zugehörige Zielgruppe. Es besteht der Bedarf, möglichst sicher, günstig, ressourcensparend und schnell zum gewünschten Ziel zu kommen. Dieser Bedarf besteht insbesondere in Ballungszentren, wo die zurückgelegten Strecken kürzer sind, aber auch in kleineren Ortschaften. In Ballungszentren gibt es wenige Parkplätze für Fahrzeuge. Bei hohem Verkehrsaufkommen besteht Staugefahr. Es gibt Fahrzeuge, deren Funktionalität auf die Freude am Fahren ausgerichtet ist. Beispiele sind Elektroroller.

### Stand der Technik

Als ein einfaches Fortbewegungsmittel in urbanen Räumen hat sich das Skateboard bewährt. Dieses wird nicht als Fahrzeug im Sinne der Straßenverkehrsordnung, sondern als Sportgerät klassifiziert. Dieses kann auch motorisiert sein, wie bspw. das INBOARD Ml mit einem Motor in den Rädern oder auch viele andere. Ein Skateboard bietet keine Möglichkeit, bei der ein Fahrer eine bequeme gestützte Position einnehmen kann und ein eher sicheres Fahrgefühl erleben kann.

Unter den Markennamen "Renault Twizzy", "BMW CLEVER", "BMW Cl" und "Toyota i-Road" sind größere Fahrzeuge für ein bis zwei Insassen mit reduzierter Funktionalität bekannt. Die bekannten Fahrzeuge sind in Bezug auf die angebotene Funktion komplex und teuer. US7850180 offenbart ein Dreirad-Fahrzeug mit Neigetechnik. Die Neigung des Fahrzeugs wird mit der Beinkraft kontrolliert. Das Fahrzeug wird mittels eines zusätzlichen Lenkers separat gelenkt. Nachteilig bei der bekannten Anordnung ist die Komplexität der Aufhängung der Vorderräder und ein aufwändiger, zusätzlicher Lenker. Auch dieses Fahrzeug ist teuer und erfordert einen hohen Wartungsaufwand.

US 4 279 429 A offenbart ein Fahrzeug mit selbsttragender Karosserie mit erster und zweiter Radachse; mit einer Lenkeinheit, welche zur Karosserie um eine Lenkachse drehbar gelagert ist und zur Karosserie um eine weitere zur Lenkachse senkrecht verlaufende Achse drehbar gelagert ist. Der Fahrer kann mit seinen Händen eine Kraft auf die Lenkeinheit ausüben und hiermit die Lenkeinheit um die Lenkachse und um die dazu senkrecht stehende Achse verdrehen.

US 3 709 315 A offenbart ein Fahrzeug mit selbsttragender Karosserie mit erster und zweiter Radachse; mit einer Lenkeinheit, welche zur Karosserie um eine Lenkachse drehbar gelagert ist und zur Karosserie um eine weitere zur Lenkachse senkrecht verlaufende Achse drehbar gelagert ist. Der Fahrer kann mit seinen Händen mittels weiteren Übertragungsgliedern eine Kraft auf die Lenkeinheit ausüben und hiermit die Lenkeinheit um die Lenkachse verdrehen. US 3 709 315 A offenbart ein Fahrzeug gemäß den Oberbegriffen der Ansprüche und 15.

US 4 198 072 offenbart ein Fahrzeug mit selbsttragender Karosserie mit erster und zweiter Radachse; mit einer Lenkeinheit, welche zur Karosserie um eine Lenkachse drehbar gelagert ist und zur Karosserie um eine weitere zur Lenkachse senkrecht verlaufende Achse (Nickachse) drehbar gelagert ist. Der Fahrer kann mit seinen Händen mittels weiteren Übertragungsgliedern eine Kraft auf die Lenkeinheit ausüben und hiermit die Lenkeinheit um die Lenkachse verdrehen. Außerdem ist der Fahrer in der Lage, mittels Verstellung eines Teiles der Rückenlehne die Lenkeinheit um die Nickachse zu verdrehen.

### Offenbarung der Erfindung

Es ist Aufgabe der Erfindung die Nachteile bekannter Fahrzeuge der eingangs genannten Art zu überwinden und ein Fahrzeug zu schaffen, welches ohne Verschlechterung wichtiger Fahrzeugeigenschaften kostengünstig herstellbar ist. Erfindungsgemäß wird die Aufgabe gelöst durch ein Fahrzeug mit den Merkmalen des Anspruchs 1 oder 15.

Das erfindungsgemäße Fahrzeug kann ein Dreirad sein. Dann sind an einer ersten Radachse zwei Räder und an einer zweiten Radachse ist nur ein Rad vorgesehen. Die Radachse mit den zwei Rädern kann sowohl die Vorder- als auch die Hinterachse bilden. Es kann aber auch ein Fahrzeug vorgesehen sein, das an beiden Radachsen jeweils zwei Räder aufweist. Wahlweise kann die Lenkeinheit dann mit der Vorder- oder der Hinterachse verbunden sein.

Die Erfindung verwendet eine um eine Lenkachse drehbare Lenkeinheit zum Lenken des Fahrzeugs. Vorzugsweise weist die Lenkeinheit eine geringere räumliche Ausdehnung auf als die tragende Struktur. Die Lenkeinheit beinhaltet einen Lenkeinheitshauptkörper. Er ist mit der ersten Radachse verbunden. Der Lenkeinheitshauptkörper kann ein separates Bauteil oder Baugruppe sein, durch welche die erste Radachse, d.h. die lenkende Radachse, hindurch geführt ist. Der Lenkeinheitshauptkörper kann auch fest mit der Radachse verbunden, beispielsweise aufgeschweisst sein. Es ist ferner denkbar, dass der Lenkeinheitshauptkörper als integraler Bestandteil der Radachse an diese angeformt ist oder die Radachse bildet. Wenn die Lenkeinheit um die Lenkachse rotiert, folgen der Lenkeinheitshauptkörper, die Radachse und damit die Räder dieser Bewegung. Beide Räder sind coaxial zu einer gemeinsamen Achse angeordnet, es sei denn, sie haben zusätzliche Radspur oder Radsturz, welche eine definierte Abweichung von der Axialität bewirken. Die Radachse mit der Lenkeinheit kann auch als lenkende Radachse bezeichnet werden.

Bei einem erfindungsgemäßen Fahrzeug ist vorgesehen, dass die Lenkachse oberhalb der Radachse in der Ebene senkrecht zur ersten Radachse in einer Richtung vom Fahrzeug weg gerichtet ist. Wenn die Lenkeinheit mit der Vorderachse verbunden ist, erstreckt sich die Lenkachse also in Fahrtrichtung nach oben. Sie bildet mit einer Achse innerhalb der Ebene senkrecht zur Radachse und gleichzeitig senkrecht zur Fahrbahn einen Nickwinkel. Wenn die Lenkeinheit mit der Hinterachse verbunden ist, erstreckt sich die Lenkachse also entgegen der Fahrtrichtung nach oben.

Die Erfindung sieht ferner vor, dass die tragende Struktur um die Lenkachse drehbar mit der Lenkeinheit verbunden ist. Das ist der Lenkwinkel. Bei der Erzeugung eines Drehmoments um die Lenkachse bei einem geschlossenen Kraftfluss innerhalb des Fahrzeugs wird eine Drehung der Lenkeinheit um die Lenkachse bewirkt. Bei einer erfindungsgemäßen Neigung der Lenkachse um einen Nickwinkel bewirkt diese Drehung, dass sich die tragende Struktur in Bezug auf die Fahrbahn seitlich neigt, während die Räder auf dem Untergrund bleiben. Das Maß der Neigung wird durch den Neigungswinkel definiert. Die lenkende Radachse eines erfindungsgemäßen Fahrzeugs bleibt bei der Kurvenfahrt parallel zur Fahrbahnoberfläche. Mit einer solchen Neigung kann bei der Kurvenfahrt den auftretenden Fliehkräften bei höherer Geschwindigkeit entgegen gewirkt werden. Es kann auch eine abschnittsweise Neigung der tragenden Struktur vorgesehen sein.

Anders als bei bekannten Anordnungen ist keine Einzelradaufhängung zu Zwecken der Lenkung erforderlich. Die Kombination aus einer um einen Nickwinkel geneigten Lenkachse und drehbarer Verbindung zwischen Lenkeinheit und tragender Struktur führt zu hoher Fahrstabilität und guter Bodenhaftung. Zum Lenken wird nur die Lenkeinheit bewegt. Eine Neigung der tragenden Struktur, einschließlich der Karosserie mit Fahrzeugsitz etc., folgt aus dieser Lenkbewegung.

Anders als beispielsweise bei einem Skateboard sitzt oder steht der Fahrer in oder auf der tragenden Struktur. Der Fahrer wird durch die tragende Struktur dauerhaft gestützt. Vorzugsweise befindet sich der Fahrer in einer aufrechten Position. Das ermöglicht eine längere und bequeme Fahrt, ähnlich wie in einem Automobil, und einen guten Überblick über den Verkehr. Die tragende Struktur und die Lenkeinheit sind erfindungsgemäß derart ausgestaltet, dass von einem so von der tragenden Struktur gestützten Fahrer ein Drehmoment auf die Lenkeinheit ausübbar ist. Die Lenkeinheit muss also für den Fahrer direkt oder über Übertragungsmittel wie Pedale oder Hebel gut erreichbar sein.

Mit der Erfindung wird ein günstiges, stabiles und sicheres Fahrzeug geschaffen, welches einfach und intuitiv gelenkt wird. Das Fahrzeug bietet ein hohes Maß an Fahrspaß.

Die Lenkeinheit kann starr mit der ersten Radachse verbunden sein. Das ermöglicht die besonders kostengünstige Herstellung. Es ist aber auch möglich, eine federnde, gedämpfte oder drehbewegliche Verbindung zwischen Radachse und Lenkeinheitshauptkörper zu wählen. Für ein verbessertes Komfort kann auch eine federnde, dämpfende oder drehbewegliche Einzelradaufhängung vorgesehen werden. In diesen Fällen können die einzelnen Drehachsen beider Räder an der lenkenden Radachse aufgrund der Federung von der Axialität zueinander abweichen.

Die Räder an der lenkenden, ersten Achse können auch durch eine Art Parallelogrammführung gelenkig in der Lenkeinheit aufgenommen sein. Das ermöglicht eine seitliche Kippbewegung der Räder relativ zur lenkenden ersten Radachse. Dies entspricht einer Schräglage der Räder zur Fahrbahn. Die Parallelogrammführung koppelt die Bewegung beider Räder, so dass diese definiert erfolgen kann. Dabei bleiben die Räder bis auf eine Radspur oder Radsturz weitgehend parallel zueinander.

In einer nicht beanspruchten Variante kann die Neigung der Lenkachse nach vorne bzw. hinten, auch als Nickwinkel bezeichnet, fest sein. Dann gibt es eine eindeutige Zuordnung zwischen Lenkwinkel und Neigungswinkel der tragenden Struktur. Bei hohen Geschwindigkeiten ist eine starke Neigung der tragenden Struktur des Fahrzeugs in der Kurve vorteilhafter als bei niedrigen Geschwindigkeiten. Umgekehrt ist ein geringer Kurvenradius beim Manövrieren mit geringen Geschwindigkeiten ohne große Neigung der tragenden Struktur wünschenswert.

Erfindungsgemäß ist ein Lager zur drehbaren Lagerung der Lenkeinheit mit einer sich parallel zur ersten Radachse erstreckenden Nickachse vorgesehen, so dass die Lenkachse mit einer in der Ebene senkrecht zur Radachse liegenden Vertikalen den Nickwinkel bildet. Es werden elektronische und/oder mechanische und/oder hydraulische Mittel zum Einstellen des Nickwinkels vorgesehen. Die Einstellung des Nickwinkels ermöglicht die Anpassung des Verhältnisses zwischen Neigung der tragenden Struktur und Kurvenradius. Wenn die Lenkachse flach nach vorne ausgerichtet ist, führt bereits eine geringe Kurvenfahrt zur Neigung der Karosserie oder tragenden Struktur. Wenn die Lenkachse fast senkrecht ausgerichtet ist, erfolgt fast keine Neigung der Karosserie oder tragenden Struktur. Vorteilhafterweise erstreckt sich die Nickachse koaxial zur lenkenden Radachse, d.h. der ersten Radachse. Noch vorteilhafter ist es, wenn die Nickachse näher an der Fahrbahn liegt als die lenkende Radachse.

Bei einer bevorzugten Ausgestaltung ist das Lager zur drehbaren Lagerung der Lenkeinheit von einem Kreuzverbinder gebildet, welcher eine Drehung der Lenkeinheit um den Nickwinkel und eine Drehung der Lenkeinheit um die Lenkachse zulässt. Die Lenkeinheit und die Karosserie werden durch zwei zueinander senkrecht angeordnete Drehachsen verbunden.

Erfindungsgemäß wird der Nickwinkel dynamisch während der Fahrt eingestellt. Die elektronischen Mittel zum Einstellen des Nickwinkels können insbesondere Sensoren zum Erfassen des Fahrzeugzustands umfassen und Signalverarbeitungsmittel zur Erzeugung eines Steuersignals zur Steuerung des Nickwinkels der Lenkachse nach Maßgabe des erfassten Fahrzeugzustands. Der Fahrzeugzustand kann beispielsweise durch die Geschwindigkeit, das Gewicht des Fahrers, die Steigung der Fahrbahn, das bisherige Fahrverhalten oder Fahrerpräferenzen, die Fahrbahnbeschaffenheit und dergleichen wiedergegeben werden. Der mit den Sensoren erfasste Fahrzeugzustand wird an eine Signalverarbeitung übertragen. Die Signalverarbeitung kann die Signale auswerten und ein Steuersignal zur Steuerung des Nickwinkels erzeugen. Dieser wird dann durch Stellglieder an der Lenkeinheit gegenüber der Nickachse auf einen Sollwert eingestellt. Die Stellglieder können mechanisch, hydraulisch, pneumatisch oder elektromechanisch, bspw. durch kleine Dreh- oder Linearmotoren, angetrieben werden. Es ist auch möglich ein Signal zu erzeugen, dass dem Fahrer anzeigt, in welche Richtung der Nickwinkel durch Ausübung eines Drehmoments vorteilhafterweise zu verändern ist.

Bei einer weiteren Ausgestaltung der Erfindung ist vorgesehen, dass der Nickwinkel nach Maßgabe der Antriebskraft eingestellt wird. Dadurch wird erreicht, dass eine Veränderung der Antriebskraft eine Veränderung des Nickwinkels zur Folge hat. Alternativ oder zusätzlich kann vorgesehen sein, dass der Nickwinkel nach Maßgabe der am Fahrzeug wirkenden Bremskraft eingestellt wird. Es kann insbesondere vorgesehen sein, dass ein definierter Verstellbereich des Nickwinkels mit der Antriebskraft korreliert, während ein anderer Verstellbereich des Nickwinkels mit der Bremskraft korreliert. Darauf kann der Fahrer durch eine Kraftausübung an dafür vorgesehenen Kraftaufnahmeelementen Einfluss nehmen.

Bei Verwendung von mechanischen Mittel zum Einstellen des Nickwinkels kann wenigstens ein Pedal, einen Griff oder anderen mechanischen hand- oder fußbetätigten Aktuator vorgesehen sein, dessen Positionsänderung eine Änderung des Nickwinkels der Lenkachse bewirkt. Im einfachsten Fall tritt der Fahrer mit dem Fuß ähnlich wie auf ein Pedal auf die Lenkeinheit, so dass diese sich nach vorne neigt, wenn eine stärkeres "in die Kurve legen" der tragenden Struktur gewünscht ist.

Es kann aber auch ein Mittel zum Fixieren eines eingestellten Nickwinkels verwendet werden. Ein solches Mittel kann beispielsweise ein Rastmechanismus sein, der die Lenkeinheit in einer gewünschten Position lösbar einrastet.

Bei einer weiteren Ausgestaltung wird ein weiteres Kreuzverbinder-Element vorgesehen, welches mit dem ersten Kreuzverbinder drehbar verbunden ist. In dieser Lösung werden die Karosserie und die Lenkeinheit über drei unabhängige Drehachsen verbunden. Diese sind die Nickachse, die Lenkachse und eine weitere ausgleichende Nickachse. In der Neutralstellung sind die Nickachse und die ausgleichende Nickachse vorzugsweise koaxial. Diese Anordnung ermöglicht die Verstellung des Nickwinkels der Lenkachse, ohne dass die Lenkeinheit eine relative Bewegung zur Karosserie erfahren muss, wie dies bei einem einzelnen Kreuzverbinder der Fall wäre. Vorzugsweise wird der Nickwinkel durch einen Aktuator verstellt. Der Aktuator ist mit einem der beiden Kreuzverbinder verbunden. Der Aktuator kann an einem Ende sowohl an der Karosserie, als auch an der Lenkeinheit angebracht werden.

Vorzugsweise ist das Fahrzeug mit einem Antrieb und einem Energiespeicher versehen zur Versorgung des Antriebs mit Energie. Der Antrieb kann beliebig ausgebildet sein und insbesondere elektrisch oder als Verbrennungsmotor mit Treibstoff betrieben werden. Es versteht sich, dass alle Antriebe für dieses Fahrzeug geeignet sind.

Der Antrieb kann als Radnabenmotor ausgebildet sein. Es ist aber auch möglich den Antrieb außerhalb der Antriebsradachse zu platzieren und das Antriebsrad über ein Getriebe anzutreiben.

Ein Akkumulator oder eine Batterie zur Versorgung eines Elektromotors mit elektrischer Energie kann als entnehmbares Modul aufgebaut sein. Dieses kann dem Fahrzeug entnommen werden und auch außerhalb des Fahrzeugs aufgeladen werden. Besonders vorteilhaft ist es, wenn die Ladeelektronik des Fahrzeugs in der Batterie integriert ist und beide zusammen als Modul vom Fahrzeug entnehmbar sind. Zusätzlich ist es möglich, die Ladeelektronik und die Batterie als einzelne, miteinander verbindbare Module auszuführen. Des Weiteren ist es möglich, ein Energie-Rekuperationssystem zu integrieren, welches die Batterie beim Bremsvorgang auflädt.

Die tragende Struktur kann von Rohren gebildet sein. Insbesondere Rohre gleichen Durchmessers ermöglichen eine sehr kostengünstige Herstellung eines stabilen Fahrzeugs. Der Fahrkomfort wird durch Sitze, Lehnen, Griffe, Gepäckablagen, Verkleidungsteile und/oder andere Komponenten, welche an der tragenden Struktur vorgesehen sind erhöht. Insbesondere ein oder zwei Sitze sind besonders zu bevorzugen. Verkleidungsteile an der tragenden Struktur schützen den Fahrer und ggf. Beifahrer vor äußeren Einflüssen. Eine Gepäckablage oder Gepäckaufnahme können je nach Verwendung zusätzlich vorgesehen sein. Diese kann insbesondere zwischen dem Fahrer und dem Beifahrer angeordnet sein.

Vorteilhaft ist ferner, wenn es über dem Fahrer angebrachte Karosserieelemente gibt. Diese können einen in diesem Bereich in der Höhe verstellbaren Zusatzrahmen vorsehen, um optimale Platzverhältnisse für unterschiedliche Körpergrößen der Fahrer zu schaffen. Zusätzlich soll der Sitz in der Höhe ebenfalls verstellbar sein. Dabei ist es vorteilhaft, wenn der in der Höhe verstellbare Zusatzrahmen weitere Funktionen des Fahrzeugs wie beispielsweise Beleuchtung, Anzeigeinstrumente oder Rückspiegel beinhaltet.

Die Konstruktion kann eine gute Übersicht auf die Verkehrslage bieten. Mit dem erfindungsgemäßen Fahrzeug wird ein geringer Footprint erreicht. Unter einem Footprint versteht man die Fläche, die beim Parken vom Fahrzeug eingenommen wird. Dadurch wird können mehr Fahrzeuge auf der gleichen Fläche geparkt werden. Der Verkehr, der durch Fahrzeuge verursacht wird, die einen Parkplatz suchen, wird reduziert. Das erfindungsgemäße Fahrzeug ist leicht und erfordert nur einen geringen Energieaufwand bei der Herstellung und Fortbewegung.

Bei einer besonders einfachen Ausgestaltung der Erfindung ist die Lenkeinheit mit den Füßen des Fahrers betätigbar. Die Lenkeinheit weist dann ein Fußbrett oder Pedale auf, auf die der Fahrer durch seine Füße eine Kraft oder ein Drehmoment ausüben kann. Das Gewicht des Fahrers wird teilweise von der tragenden Struktur und teilweise von der Lenkeinheit gestützt. Das auf die Lenkeinheit ausgeübte Drehmoment um die Lenkachse führt dann unmittelbar ohne weitere Kraftübertragung zur Kurvenfahrt und Neigung der tragenden Struktur.

Bei einer Verbindung der Lenkeinheit mit der Hinterachse ist die Lenkeinheit über weitere kraftübertragende und/oder krafterzeugende Elemente betätigbar. Diese Elemente können über die Füße des Fahrers oder über seine Hände betätigbar sein. Die Elemente bewirken eine Verstellung des Lenkwinkels und/oder des Nickwinkels.

Bei einer weiteren Ausgestaltung der Erfindung ist eine weitere Lenkeinheit mit zwei Rädern zum Lenken der zweiten Radachse vorgesehen.

Ausgestaltungen der Erfindung sind Gegenstand der Unteransprüche. Ausführungsbeispiele sind nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen und den einschlägigen Internetseiten und Publikationen, insbesondere lexikalischer Art, beispielsweise www.wikipedia.de, www.wissen.de oder www.techniklexikon.net, Publikationen der Wettbewerber, forschenden Institute, Universitäten und Verbände, beispielsweise Verein Deutscher Ingenieure oder Deutsche Physikalische Gesellschaft, dargelegt sind. Insbesondere haben die verwendeten Begriffe nicht die gegenteilige Bedeutung dessen, was der Fachmann den obigen Publikationen entnimmt.

Weiterhin werden hier folgende Bedeutungen für die verwendeten Begriffe zugrundegelegt:
Antrieb: Konstruktive Einheit, die mittels Energieumformung eine Kraft oder Drehmoment erzeugt. Häufig ist dies ein Motor mit einem eventuell notwendigen Getriebe. Sie kann ein Drehantrieb oder ein Linearantrieb sein.
Fahrbahn: der Teil einer Straße, der von Fahrzeugen zu befahren ist
Fahrbahnoberfläche: Die Oberfläche, welche die Räder des Fahrzeugs abstützt
Fahrzeug: ein technisches Gerät, was der Fortbewegung dient
Hinterachse: die Achse, die nach dem Fahrzeugschwerpunkt angebracht ist und die Hinterräder über entsprechende Lager trägt
Kreuzverbinder (Kardangelenk): Verbindendes Glied mit zwei zueinander senkrecht verlaufenden Drehachsen, welche sich nicht unbedingt schneiden müssen.
Lenkachse: Achse um welche eine Lenkeinheit oder ein Kreuzverbinder drehbar gelagert ist
Neigung: Maß des Winkels zwischen zwei geometrischen Elementen wie Achsen oder Ebenen. Konkret Maß des Winkels zwischen der Symmetrieebene des Fahrzeugs und der Fahrbahn.
Nickachse: Richtung quer zur Längsachse eines Körpers, bzw. Achse, um welche die Lenkeinheit oder der Kreuzverbinder drehbar gelagert ist.
Rad: ein scheibenförmiger Gegenstand mit idealerweise kreisförmiger Kontur, der um eine Achse, die senkrecht auf der idealisierten Kreisebene steht, drehbar gelagert ist und am häufigsten als Wagenrad verwendet wird.
Radachse: Maschinenelement an welchem Räder drehbar gelagert sind.
Vorderachse: die Achse, die vor dem Fahrzeugschwerpunkt angebracht ist und die Vorderräder über entsprechende Lager trägt

### Kurze Beschreibung der Zeichnungen

- Fig. 1: ist eine Seitenansicht eines Dreirads mit lenkender Vorderachse ohne einstellbaren Nickwinkel gemäß einem ersten Ausführungsbeispiel.
- Fig. 2: ist eine Draufsicht auf die Lenkeinheit vom Dreirad aus Figur 1 in neutraler Stellung.
- Fig. 3: ist eine Draufsicht des Dreirads aus Figur 1 bei der Kurvenfahrt nach rechts.
- Fig. 4: ist eine Seitenansicht eines Dreirads mit lenkender Hinterachse ohne einstellbaren Nickwinkel gemäß einem zweiten Ausführungsbeispiel.
- Fig. 5: ist eine Seitenansicht eines vierrädrigen Fahrzeugs mit lenkender Vorder- und Hinterachse ohne einstellbaren Nickwinkel gemäß einem dritten Ausführungsbeispiel.
- Fig. 6: ist eine Draufsicht des vierrädrigen Fahrzeugs aus Fig. 5 bei der Kurvenfahrt nach rechts.
- Fig. 7: ist eine Seitenansicht eines vierrädrigen Fahrzeugs mit lenkender Vorder- und Hinterachse ohne einstellbaren Nickwinkel gemäß dem dritten Ausführungsbeispiel mit flacherem Nickwinkel als auf Fig. 5.
- Fig. 8: ist eine Draufsicht des vierrädrigen Fahrzeugs aus Fig. 7 bei der Kurvenfahrt nach rechts.
- Fig. 9: ist eine Seitenansicht der Lenkeinheit ohne einstellbaren Nickwinkel
- Fig. 10: ist eine Frontalansicht der Lenkeinheit mit Rädern mit Radsturz
- Fig. 11: ist eine Frontansicht der Lenkeinheit mit Rädern mit Parallelogrammführung
- Fig. 12: ist eine Frontansicht der Lenkeinheit mit Rädern mit Parallelogrammführung in geneigter Stellung während der Kurvenfahrt
- Fig. 13: ist eine Seitenansicht der Lenkeinheit mit gefedert gelagerten Rädern
- Fig. 14: ist eine Seitenansicht der Lenkeinheit mit einstellbarem Nickwinkel und beispielhafter Anordnung zwischen Kreuzverbinder und Nickachse
- Fig. 15: ist eine Seitenansicht der Lenkeinheit mit einstellbarem Nickwinkel und weiterer beispielhafter Anordnung zwischen Kreuzverbinder und Nickachse
- Fig. 16: ist eine Seitenansicht der Lenkeinheit mit einstellbarem Nickwinkel und dritter beispielhafter Anordnung zwischen Kreuzverbinder und Nickachse
- Fig. 17: ist eine Seitenansicht der Lenkeinheit mit einstellbarem Nickwinkel und vierter beispielhafter Anordnung zwischen Kreuzverbinder und Nickachse
- Fig. 18: ist eine Seitenansicht der Lenkeinheit mit mittels Aktuator einstellbarem Nickwinkel
- Fig. 19: ist eine Seitenansicht der Lenkeinheit mit einstellbarem Nickwinkel und zwei Kreuzverbinder in einer ersten Position
- Fig. 20: ist eine Seitenansicht der Lenkeinheit mit einstellbarem Nickwinkel und zwei Kreuzverbinder in einer zweiten Position
- Fig.21: ist eine Draufsicht auf die Lenkeinheit senkrecht zur Lenkachse mit einstellbarem Nickwinkel und zwei Kreuzverbinder in der ersten Position
- Fig. 22: ist eine Draufsicht auf die Lenkeinheit senkrecht zur Lenkachse mit einstellbarem Nickwinkel und zwei Kreuzverbinder in der ersten Position bei der Kurvenfahrt nach links.
- Fig. 23: ist eine Draufsicht eines Dreirads mit Fahrer und auf der Lenkeinheit abgestützten Füßen.
- Fig. 24: ist eine Draufsicht auf die Lenkeinheit senkrecht zur Lenkachse mit auf der Lenkeinheit abgestützten Füßen
- Fig. 25: ist eine schematische Darstellung von möglichen Positionen des Nickwinkels
- Fig. 26: ist eine Seitenansicht auf die Lenkeinheit bei einer direkten Fusskrafteinwirkung
- Fig. 27: ist eine Seitenansicht auf die Lenkeinheit bei einer indirekten Fusskrafteinwirkung über Zwischenelemente
- Fig. 28: ist eine Seitenansicht des Dreirads mit lenkender Hinterachse und mechanischen Übersetzungs glieder

- Fig. 29: ist eine Draufsicht des mit lenkender Hinterachse und mechanischen Übersetzungsglieder bei der Kurvenfahrt nach rechts
- Fig. 30: ist eine Seitenansicht des Dreirads mit vorgesehenen Handgriffen
- Fig. 31: ist eine Seitenansicht des Dreirads mit lenkender Vorderachse und mechanischen Übersetzungsglieder, welche mit Handgriffen betätigt werden
- Fig. 32: ist eine Seitenansicht auf die Lenkeinheit mit integrierten Pedalen
- Fig. 33: ist eine Seitenansicht auf die Lenkeinheit mit weiteren Bedienelementen
- Fig. 34: ist eine Seitenansicht des Dreirads mit integrierter Batterie und Ladeelektronik
- Fig. 35: ist eine Seitenansicht des Dreirads mit angebrachten Peripheriebauteilen
- Fig. 36: ist eine Seitenansicht des Dreirads mit Fahrer und Beifahrer
- Fig. 37: ist eine Seitenansicht des Dreirads mit weiteren angebrachten Peripheriebauteilen
- Fig. 38: ist eine perspektivische Ansicht des Dreirads mit lenkender Vorderachse und möglicher Serienausstattung

### Beschreibung der Ausführungsbeispiele

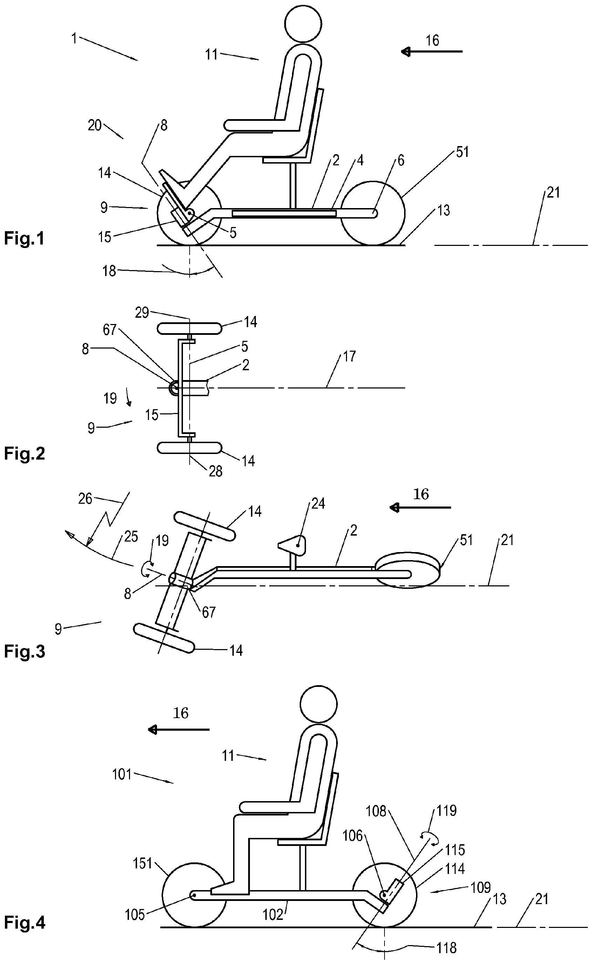

### 1. Ausführungsbeispiel: Dreirad mit lenkender Vorderachse (Fig. 1-3)

**Fig. 1** zeigt ein allgemein mit 1 bezeichnetes Fahrzeug. Das Fahrzeug weist eine selbsttragende Karosserie 2 auf. Die Karosserie 2 besteht im vorliegenden Ausführungsbeispiel aus einer nachstehend näher erläuterten Rohrkonstruktion. Verschiedene Rohre sind so zusammengeschweißt, dass sich ein T-förmiger Grundriss ergibt. Dies ist beispielsweise in **Fig. 3** erkennbar. Es versteht sich, dass auch ein rechteckiger Grundriss gebildet und/oder eine geschlossene oder halbgeschlossene Karosserie verwendet werden kann. Schließlich ist es auch möglich einen tragenden Rahmen mit oder ohne Verkleidung zu verwenden.

Die Karosserie 2 beherbergt einen Antrieb in Form eines Elektromotors. Es versteht sich, dass auch jeder andere Motor, etwa ein Otto- oder Dieselmotor verwendet werden kann. Der Elektromotor wird von einem Energiespeicher in Form eines wiederaufladbaren Akkumulators mit Energie versorgt. Statt eines Akkumulators können auch austauschbare Batterien verwendet werden. Wenn ein Treibstoffmotor verwendet wird, kann auch ein Treibstofftank für Treibstoff wie Benzin, Diesel, sonstige Öle, Wasserstoff, Erdgas, Ethanol und dergleichen verwendet werden. Im vorliegenden Ausführungsbeispiel wird der Akkumulator beim Bremsen oder bei Bergabfahrten ebenfalls wieder aufgeladen.

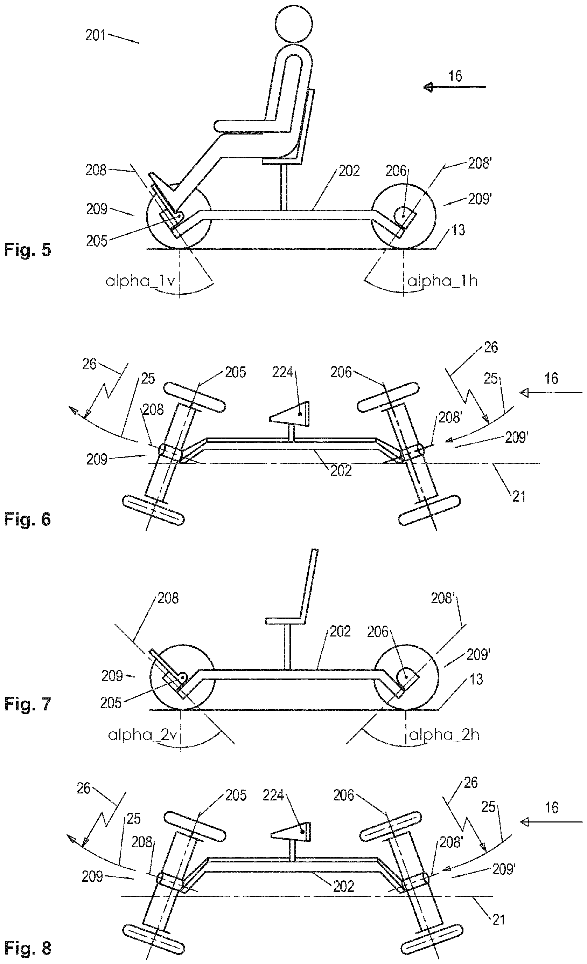

Die Karosserie 2 weist eine Vorderachse 5 und eine Hinterachse 6 auf. Im vorliegenden Ausführungsbeispiel ist an der Hinterachse 6 nur ein Rad 51 und an der Vorderachse 5 sind zwei Räder 14 vorgesehen. Andere Ausführungsbeispiele weisen jeweils vorne und hinten zwei Räder auf, wie dies etwa in **Fig.5 bis 8** dargestellt ist. Es ist ferner denkbar, die Hinterachse 6 mit zwei Rädern zu versehen und die Vorderachse 5 nur mit einem Rad zu versehen. Dieses zweite Ausführungsbeispiel ist in **Fig.4** dargestellt.

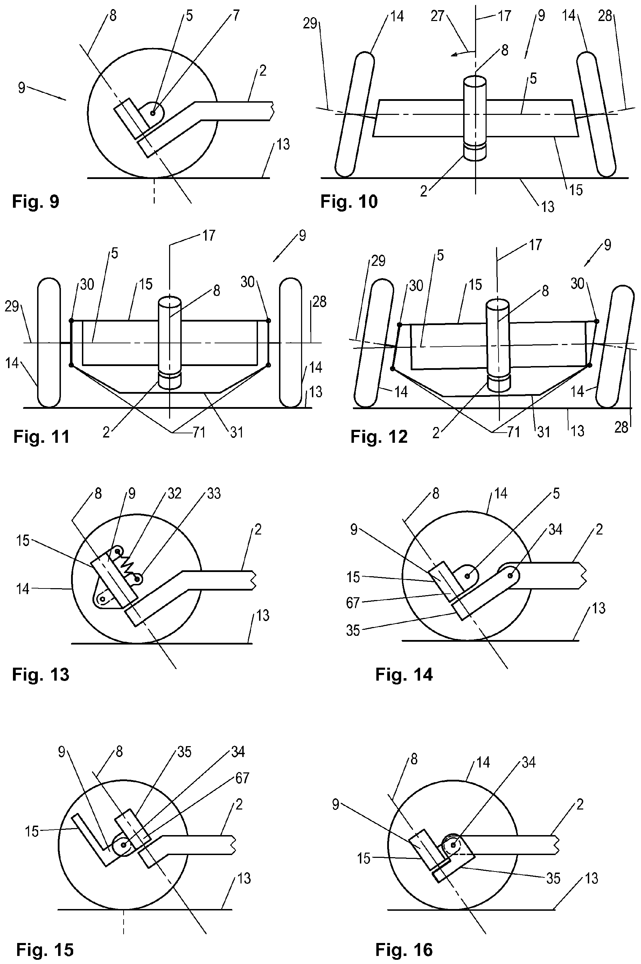

Die Vorderachse 5 ist im vorliegenden ersten Ausführungsbeispiel als lenkende Radachse 7 ausgebildet (**Fig. 9**). Es ist auch möglich, die Hinterachse 6 als lenkende Radachse zu verwenden. Die als lenkende Radachse 7 ausgebildete Vorderachse 5 ist starr mit einer Lenkeinheit 9 verbunden. Im vorliegenden Ausführungsbeispiel ist die Vorderachse 5 durch die Lenkeinheit 9 hindurch geführt und mit dieser verschweißt oder auf andere Weise fest verbunden. Die Lenkeinheit 9 ist ein Materialstück, welches groß genug ist um Kräfte in nachstehend beschriebener Weise darauf auszuüben. Die Kräfte können direkt mit den Füßen oder Händen des Fahrers, einem Hebel oder einem anderen Kraftübertragungsmittel auf die Lenkeinheit 9 ausgeübt werden. Im vorliegenden Ausführungsbeispiel umfasst die Lenkeinheit 9 einen in Richtung der Vorderachse 5 langgestreckten, im Wesentlichen planen Hauptkörper 15, auf dem die Füße des Fahrers rechts und links der Lenkachse 8 ruhen. Die Vorderachse 5 ist durch seitliche Vorsprünge an dem Hauptkörper 15 hindurch geführt und an diesen starr befestigt. Die Lenkeinheit 9 kann also die lenkende Radachse entweder umfassen oder an dieser befestigt sein.

Koaxial sind an der Vorderachse 5 zwei Räder 14 drehbar befestigt. Dies ist in **Fig. 2** und **Fig. 3** zu erkennen. Eine Einzelrad-Aufhängung ist hier nicht erforderlich. Die Lenkeinheit 9 ist über ein Lager 67 mit der Karrosserie 2 verbunden. Das Lager 67 ermöglicht eine Rotation der Lenkeinheit 9 um eine als "Lenkachse" bezeichnete Achse 8 senkrecht zur lenkenden Vorderachse 5. Die Rotation der Lenkeinheit 9 um diese Lenkachse 8 bewirkt eine stabile Neigungsposition der Karosserie 2 in Bezug auf die Fahrbahn 13.

In **Fig. 1** ist nur eines der beiden Räder 14 dargestellt. Die Lage der beiden Vorderräder 14 zueinander ist in **Fig. 2 und 3** deutlich zu erkennen. Das Rad 51 dient in diesem Ausführungsbeispiel als Antriebsrad. Der Hauptkörper 15 ist über das Lager 67 für die Lenkachse 8 derart mit der Karosserie 2 verbunden, dass die Lenkachse 8 in Fahrtrichtung 16 geneigt ist. Dies ist in **Fig. 1** gut zu erkennen.

Das Fahrzeug 1 ist im wesentlich symmetrisch zu einer Symmetriebene 17, die senkrecht zur Fahrbahn 13 und in der Darstellungsebene von Figur 1 verläuft. Das Maß der Neigung der Lenkachse 8 wird durch den Nickwinkel 18 beschrieben. Bei einer zur Fahrbahn 13 senkrechten Lenkachse 8 beträgt der Nickwinkel 18 beispielsweise 0°. Bei einer zur Fahrbahn 13 parallelen und nach vorn gerichteten Lenkachse 8 beträgt der Nickwinkel 18 beispielsweise 90°. **Fig. 1** zeigt einen Nickwinkel 18 entsprechend der erfindungsgemäßen Voraussetzung, der kleiner ist als 90° und größer als 0°.

Der Lenkwinkel 19 ist der Drehwinkel um die Lenkachse 8. Der Lenkwinkel ist hier definiert als Winkel zwischen der Symmetrieebene 17 des Fahrzeugs 1 und Vorderachse 5. In einer in Figur 1 gezeigten neutralen Stellung kontaktieren alle drei Räder 14, 51 die Fahrbahn 13. Bei dieser Stellung steht das Fahrzeug 1 oder es fährt geradeaus, wie dies in Figur 2 gezeigt ist. Dann ist der Lenkwinkel 19 gegenüber der Fahrtrichtung 0°. Dies ist in Figur 2 zu erkennen. Bei einer Änderung des Lenkwinkels 19 im positiven oder negativen Sinne, d.h. nach rechts oder links, verändert sich die räumliche Anordnung zwischen der Lenkeinheit 9 mit der Vorderachse 5 und der Karosserie 2. Alle drei Räder 14, 51 bleiben dabei in Kontakt mit der Fahrbahn 13. Es gibt auch dynamische Fälle mit weiteren Kräften, welche dazu führen, dass ein oder mehrere Räder 14 den Kontakt mit der Fahrbahn 13 verlieren.

Das Fahrzeug weist eine Fahrzeuglängsachse 21 in der Symmetrieebene 17 auf. Sie kann durch die Überschneidung der Symmetrieebene 17 und der ebenen Fahrbahn 13 definiert werden. Durch die Neigung der Lenkachse 8 in Fahrtrichtung 16 um den Nickwinkel 18 verändert sich bei einem Lenkwinkel 19 ungleich 0° die seitliche Neigung der Karosserie 2. Die Symmetrieebene 17 des Fahrzeugs 1 neigt sich zur Fahrbahn 13 um einen Neigungswinkel 27. Der Neigungswinkel 27 beschreibt das Ausmaß der seitlichen Neigung. Der Neigungswinkel 27 (**Fig.10**) ist eine Funktion des Nickwinkels 18 und des Lenkwinkels 19.

Zur Illustration und zum besseren Verständnis werden zwei Extremfälle beispielhaft erläutert: Bei einem Nickwinkel 18 von 0° befindet sich die Lenkachse 8 senkrecht zur Fahrbahn 13. Dann wirkt sich der Lenkwinkel 19 im quasi-statischen Fall nicht auf die seitliche Neigung des Fahrzeugs 1 aus. Bei einem Nickwinkel 18 von 90° ist die Lenkachse 8 parallel zur Fahrtrichtung 16. Dann ist der Lenkwinkel 19 idealisiert betragsmäßig fast gleich dem Neigungswinkel 27. Wenn die Lenkachse 8 auf der Fahrbahn 13 liegen würde, wären beide Winkel tatsächlich identisch. Die Betrachtungen sind eher theoretischer Natur. Der Lenkradius 26 des Fahrzeugs 1 wäre dabei unendlich und das Fahrzeug 1 kann nur geradeaus fahren. Für das erfindungsgemäße Fahrzeug 1 liegt der Nickwinkel 18 in dem Bereich zwischen 0° und 90° und darf weder den einen, noch den anderen Randwert des Bereichs annehmen.

Bei einem Lenkvorgang ist der Lenkwinkel 19 ungleich 0°. Aufgrund der Neigung der Lenkachse 8 in Fahrtrichtung 16 verschiebt sich bei einem Lenkvorgang der Fahrzeugschwerpunkt 24 in die Bahnkurve 25. Dadurch wird eine Erhöhung der Fahrstabilität des Fahrzeugs 1 wie bei jedem gängigen Zweirad-Fahrzeug 1 erreicht. In der Draufsicht auf **Fig. 3** ist zu erkennen, wie der Fahrzeugschwerpunkt 24 auf der kurveninneren Seite der Fahrzeuglängsachse 21 liegt. Zum Verständnis: Dieser Effekt wäre bei einer Neigung der Lenkachse 8 entgegen der Fahrtrichtung 16 nicht gegeben. Der Schwerpunkt verschöbe sich weg von der Bahnkurve 25 und das fahrdynamische Verhalten würde sich verschlechtern.

Das beschriebene Fahrzeug arbeitet wie folgt:
Wenn der Fahrer mit dem beispielsweise linken Fuß Druck auf die linke Seite der Lenkeinheit ausübt, rotiert die Lenkeinheit um die nach vorne geneigte Lenkachse 8. Die Neigung der Lenkachse führt dabei, wie bei herkömmlichen Fahrzeugen, zu einer Lenkbewegung nach rechts, die eine Änderung der Fahrtrichtung bewirkt. Die Rotation der Lenkeinheit gegenüber der Karosserie führt aber auch zu einer Neigung des Fahrzeugs um die Fahrzeuglängsachse 21. Diese Bewegung wirkt den Fliehkräften bei der Kurvenfahrt entgegen. Es wird eine hohe Fahrstabilität erreicht. Das Fahrzeug neigt sich also bei der Kurvenfahrt in die Kurve. Selbstverständlich bewirkt Druck auf die rechte Seite der Lenkeinheit eine Kurvenfahrt nach links und eine zugehörige Neigung des Fahrzeugs nach links.

Die Neigung der Karosserie wird nicht durch eine Neigung des Fahrers, wie bei einem Motorrad bewirkt, sondern durch die Rotation der Lenkeinheit. Die Verbindung von Lenken und Neigen in einer gemeinsamen Einheit, nämlich der Lenkeinheit, führt zu einer großen Kostenersparnis.

Wenn die Lenkachse stark nach vorne geneigt wird, führt der Druck auf eine Seite der Lenkeinheit und der damit einhergehende Lenkwinkel zu einer "geringeren" Kurvenfahrt mit größerem Kurvenradius als wenn die Lenkachse nur wenig nach vorne geneigt ist. Dafür führt diese starke Neigung der Lenkachse nach vorne zu einer größeren Neigung des Fahrzeugs in diese Richtung. Eine solche Einstellung ist bei höherer Geschwindigkeit zu bevorzugen.

Wenn die Lenkachse nur wenig nach vorne geneigt ist, also eher steil verläuft, führt der Druck auf eine Seite der Lenkeinheit und der damit einhergehende Lenkwinkel zu einer scharfen Kurve mit geringem Kurvenradius. Die Neigung der Karosserie ist hingegen eher gering. Diese Einstellung ist bei geringer Geschwindigkeit, etwa beim Manövrieren zu bevorzugen.

### 2. Ausführungsbeispiel: Dreirad mit lenkender Hinterachse (Fig.4)

In **Fig. 4** ist ein alternatives Fahrzeug 101 abgebildet, welches zwei koaxial zueinander angeordnete Räder 114 auf der Hinterachse 106 aufweist. Anders als bei dem oben beschriebenen ersten Ausführungsbeispiel ist nun die Hinterachse 106 statt die Vorderachse 105 mit der Lenkeinheit 109 verbunden bzw. bildet einen Teil davon. In diesem Ausführungsbeispiel ist keine Lenkeinheit an der Vorderachse 105 vorgesehen. Das antreibende Rad ist nun das Rad 151 an der Vorderachse 105.

Die Lenkeinheit 109 ist um eine Lenkachse 108 drehbar mit der Karosserie 102 verbunden. Wie bei obigem Ausführungsbeispiel bestimmen der Nickwinkel 118 und der Lenkwinkel 119 die Fahrweise.

Im Gegensatz zu dem in **Fig. 1** dargestellten Ausführungsbeispiel ist die Lenkachse 108 nach oben entgegen der Fahrtrichtung 116 geneigt. Die erfindungsgemäßen Effekte werden nämlich immer dann erreicht, wenn die Lenkachse nach oben in einer Richtung vom Fahrzeug weg gerichtet ist. Wenn die Lenkeinheit mit der Vorderachse verbunden ist, ist also eine Neigung nach vorne oben erforderlich. Wenn die Lenkeinheit mit der Hinterachse 106 verbunden ist, dann ist eine Neigung der Lenkachse 108 nach hinten oben erforderlich.

Im vorliegenden Ausführungsbeispiel hat der Nickwinkel 118 einen Wert größer als 0° und kleiner als 90°. Dabei ist der Nickwinkel so definiert, dass bei 90° die Lenkachse 108 parallel zur Fahrbahn 113 und entgegen der Fahrtrichtung 116 gerichtet ist. Der Nickwinkel 118 ist in Figur 4 gut zu erkennen. Wie bei dem ersten Ausführungsbeispiel bewirkt eine Bewegung der Lenkeinheit 109 eine Neigung der Karosserie 102 um die Fahrzeuglängsachse 21 in der "richtigen" Richtung, d.h. in die Richtung, in welche auch die Kurvenfahrt erfolgt. Auch bei dieser Anordnung ist die Fahrstabilität und das fahrdynamische Verhalten des Fahrzeugs 101 verbessert.

Bei beiden Ausführungsbeispielen gilt, dass je steiler der Nickwinkel 18 bzw. 118 ist, umso mehr neigt sich die Karosserie bei gleichem Kurvenradius.

Die lenkende Radachse 5 bzw. 106 wird im neutralen, stabilen und aufrechten Zustand des Fahrzeugs 1 definiert, bei dem sich die Symmetrieebene 17 des Fahrzeugs 1 bzw. 101 senkrecht zur Fahrbahn 13 erstreckt. Die lenkende Radachse 5 bzw. 106 verbindet die Zentren beider Räder 14 bzw. 114 und ist bezüglich der Lenkeinheit fest.

Die einzelnen Drehachsen der aufgehängten Räder 14 bzw. 114 können je nach Fahrsituation davon abweichen. Eine solche Abweichung ist beispielsweise bei Einfederungsvorgängen, seitlichen Neigungen, Radspur oder Radsturz möglich. Sowohl im ersten, als auch im vorliegenden zweiten Ausführungsbeispiel können beide Räder 14, bzw. 114 der Vorderachse 5, bzw. der Hinterachse 106 mit Radsturz zur lenkenden Radachse 5, bzw. 106 aufgenommen. Dies ist in **Fig. 10** illustriert. Man erkennt, dass die Rotationsebene der Räder 14 gegenüber der im Stillstand vertikalen Symmetrieebene 17 des Fahrzeugs 1 geneigt ist. Die Räder 14 stehen auf der Fahrbahn quasi breiter auseinander als oberhalb der Fahrbahn. Dadurch wird die Fahrstabilität in der Kurve zusätzlich erhöht. Die bei einer Kurvenfahrt entstehenden seitlichen Kräften auf die Räder werden hiermit ebenfalls vorteilhafter aufgenommen. Dabei entsteht nicht nur eine axiale, sondern auch eine radiale Kraftkomponente durch das kurvenäußere Rad. Um die Geradeausfahrt zu stabilisieren, können beide mit zur Lenkeinheit 9 gehörenden Räder 14 mit Radspur zur Achse 6 aufgenommen werden. Es versteht sich, dass auch die Räder 114 des zweiten Ausführungsbeispiels und aller weiteren Ausführungsbeispiele wie hier beschrieben mit Radspur aufgenommen werden können.

### 3. Ausführungsbeispiel: Fahrzeug mit zwei lenkenden Achsen (Fig.5 bis 8)

In **Fig. 5** ist ein alternatives Fahrzeug 201 abgebildet, welches zwei koaxial zueinander angeordnete Räder auf der Vorderachse 205 aufweist und zwei koaxial zueinander angeordnete Räder auf der Hinterachse 206 aufweist. Dieses Fahrzeug ist eine Kombination aus Ausführungsbeispielen 1 und 2 und funktioniert in gleicher Art und Weise. Die Lenkachsen 208 der Vorderachse und 208' der Hinterachse werden jeweils durch die Nickwinkel **alpha_1v** und **alpha_1h** beschrienen. Um einen ständigen Bodenkontakt aller vier Räder zur Fahrbahn 13 zu gewährleisten, ist es notwendig, dass **alpha_1v = alpha_1h.**

Auf Fig. 7 ist eine alternative Ausgestaltung vom Ausführungsbeispiel mit einem flacheren Nickwinkel dargestellt. Der Winkel der vorderen Lenkachse 208 beträgt **alpha_2v** und der Winkel der hinteren Lenkachse 208' beträgt **alpha_2h.** Diese müssen ebenfalls dem Verhältnis **alpha_1v = alpha_1h** entsprechen. Außerdem ist **alpha-1v < alpha_2v.** Dies hat zur Folge, dass ein Fahrzeug nach der alternativen Ausgestaltung ein höheres Maß an Neigung beim gleichen Kurvenradius 26 wie das Fahrzeug aus **Fig. 6 und 7** aufweist. Dabei befindet sich der Fahrzeugschwerpunkt 224 in der alternativen Ausgestaltung tiefer ins Kurveninnere. Dies führt zu einer besseren Stabilität bei höheren Geschwindigkeiten.

### 4.Ausführungsbeispiel: Kippgelenke (Fig.11 und 12)

In Fig. 11 ist eine mögliche Ausgestaltung der Lenkeinheit 9 des ersten Ausführungsbeispiels dargestellt, bei welcher die Drehachsen 28 und 29 der jeweiligen Räder 14 zusätzlich gelenkig mittels Kippgelenke 30 am Hauptkörper 15 aufgehängt sind. Die Verwendung von Kippgelenken 30 ist vorteilhaft, aber nicht zwingend erforderlich. Eine solche Aufhängung ist natürlich bei allen Ausführungsbeispielen möglich, auch wenn sie nur anhand dieses Ausführungsbeispiels erläutert wird.

Die Achsen dieser Kippgelenke 30 erstrecken sich parallel zur Symmetrieebene 17 des Fahrzeugs 1. Sie verlaufen aber nicht zwingend parallel zur Fahrbahn 13. Durch eine Art Parallelogrammführung werden beide Räder 14 mittels einer Koppelstange 31 über weitere Gelenke 71 verbunden. Dadurch können sie in gegenseitiger Abhängigkeit eine seitliche Kippbewegung vorführen und eine Schräglage zur Fahrbahn 13 einnehmen. Diese Schräglage ist gut auf **Fig. 12** zu erkennen. Dadurch wird die dynamische Seitenlage des Fahrzeugs 1, insbesondere bei Abbiegevorgängen, zusätzlich stabilisiert.

Die Kippgelenke 30 ermöglichen eine Verschiebung des Fahrzeugschwerpunktes 24 in die Kurve. Gleichzeitig werden die seitlichen Kräfte am Rad 14 und an der Aufhängung günstiger eingeleitet. Bei einer idealen Parallelogrammführung 31 bleiben dabei beide Räder 14 parallel zueinander. Durch das Vorsehen einer Radspur und/oder Radsturz, wie auch durch die Anpassung der Geometrieparameter der Parallelogrammführung 31 ist es möglich, das räumliche Verhältnis der Räder 14 zueinander von der Fahrposition abhängig zu machen und an gewünschten dynamischen Eigenschaften anzupassen.

### 5. Ausführungsbeispiel: Federnde oder dämpfende Elemente (Fig.13)

Zusätzlich zu den Eigenschaften der vorherigen Ausführungsbeispiele werden die Räder 14 über federnde und/oder dämpfende Elemente 32 am Hauptkörper 15 aufgenommen. Dies ist anhand von **Fig. 13** für das erste Ausführungsbeispiel illustriert. Die Verwendung von federnden oder dämpfenden Elementen 32 ist vorteilhaft, aber nicht zwingend erforderlich. Eine solche Dämpfung ist natürlich bei allen Ausführungsbeispielen möglich, auch wenn sie nur anhand dieses Ausführungsbeispiels erläutert wird.

Im vorliegenden Ausführungsbeispiel werden die Räder 14 über weitere Schwingarme 33 aufgenommen. Die Schwingarme 33 werden gegenüber dem Hauptkörper 15 der Lenkeinheit 9 gefedert und/oder gedämpft. Dafür können übliche Federn und oder Dämpfer 32 eingesetzt werden, die auch bei Fahrrädern oder Motorrädern Verwendung finden. Auch Torsionselemente sind geeignet. Die Federn, Dämpfer oder Torsionselemente 32 werden so abgestimmt, dass die Drehachsen beider Räder 14 in der Neutralstellung, d.h. bei Geradeausfahrt, übereinstimmen.

### 6. Ausführungsbeispiel: Nickachse mit Kreuzverbinder (Kardangelenk) (Fig.14)

Bei einer Ausführungsvariante der oben beschriebenen Ausführungsbeispiele wird die Lenkeinheit 9 um eine weitere Achse 34 drehbar mit der Karosserie 2 gelagert. **Fig. 14** zeigt eine erste Möglichkeit der drehbaren Lagerung. **Fig. 15** zeigt eine zweite Möglichkeit der drehbaren Lagerung.

Die zusätzliche Achse wird Nickachse 34 genannt. Die Nickachse 34 erstreckt sich parallel zu der lenkenden Radachse, also entweder der Vorderachse 5 im ersten Ausführungsbeispiel oder der Hinterachse 106 im zweiten Ausführungsbeispiel. Zur Verwirklichung des weiteren Lagers ist zwischen Hauptkörper 15 und Karosserie 2 ein Gelenkelement, beispielsweise in Form eines Kreuzverbinders 35 angeordnet. Der Kreuzverbinder 35 lagert die Lenkachse 8 und die Nickachse 34. Über den Kreuzverbinder 35 ist einerseits die Lenkachse 8 mit dem Hauptkörper 15 der Lenkeinheit 9 und andererseits die Nickachse 34 mit der Karosserie 2 verbunden. Es ergibt sich zwischen Karosserie 2 und Lenkeinheit 9 eine kardanische Verbindung.

Bei diesem Ausführungsbeispiel ist der Kreuzverbinder 35 um die Nickachse 34 drehbar mit der Karosserie 2 verbunden. Der Hauptkörper 15 ist um die Lenkachse 8 drehbar an den Kreuzverbinder 35 angelenkt. Die Nickachse ist in Figur 14 gut zu erkennen. Sie verläuft parallel zur Radachse 5 durch die Verbindung zur Karosserie 2.

Durch die Verwendung einer in Figur 14 dargestellten Anordnung führt eine Rotation des Kreuzverbinders 35 mittels der daran befindlichen Lenkeinheit 9 mit dem Hauptkörper 15 um die Nickachse 34 zu einer Verstellung der Lenkachse 8 in Bezug auf die Karosserie 2. Auf diese Weise kann der Nickwinkel 18 auf einen gewünschten Wert eingestellt werden.

Es versteht sich, dass der beschriebene Kreuzverbinder für verschiedene Ausführungsbeispiele verwendet werden kann und nicht auf die Ausgestaltung in Verbindung mit dem ersten Ausführungsbeispiel beschränkt ist.

### 7. Ausführungsbeispiel: Nickachse mit Kreuzverbinder (Kardangelenk) in alternativer Ausgestaltung (Fig.15)

Ein alternatives Ausführungsbeispiel für die Ausgestaltung des Kreuzverbinders 35 ist in **Fig. 15** dargestellt. Hier sind die Lager quasi vertauscht. Das zwischen Karosserie 2 und Kreuzverbinder 35 vorgesehene Lager 67 ermöglicht eine Rotation um die Lenkachse 8. Der Hauptkörper 15 ist um die Nickachse 34 drehbeweglich an den Kreuzverbinder 35 angelenkt.

Je nach Lage der Nickachse 34 ergeben sich unterschiedliche Eigenschaften für das Fahrzeug. Wenn die Nickachse 34 sich entlang der Vorderachse 5 erstreckt, führt eine Drehung des Hauptkörpers 15 um die Nickachse 34 nicht zwingend zu einer Änderung der restlichen Fahrzeugkinematik. Nur der Hauptkörper 15 wird bewegt. Der Kreuzverbinder 35 erfährt keine räumliche Veränderung. Wenn die Nickachse außerhalb der Vorderachse 5 liegt, führt eine Drehung des Hauptkörpers 15 um die Nickachse 34 zu einer Verstellung der räumlichen Position der Räder 14 an der lenkenden Vorderachse in Bezug auf den Kreuzverbinder 35 und die Karosserie 2. Diese Verstellung führt zu einer Änderung der Fahrzeugstruktur in Bezug auf die Fahrbahn 13. Dadurch ändert sich die Ausrichtung der Lenkachse 8 und der zugehörige Nickwinkel 18. Das Maß dieser Änderung ist jedoch im Vergleich zu der Anordnung aus Figur 14 deutlich geringer. Dieses Ausführungsbeispiel ist für Fälle vorteilhaft, bei welchen nur eine Verstellung des Hauptkörpers gewünscht ist.

### 8. Ausführungsbeispiel: Nickachse auf der lenkenden Radachse (Fig.16)

**Fig. 16** zeigt ein Ausführungsbeispiel, bei dem sich die Nickachse 34 im Stillstand bis auf Elastizitäten im System oder bei der Integration von federnden Elementen koaxial zur lenkenden Radachse 7, der Vorderachse 5 erstreckt. Es versteht sich, dass die grundlegende Idee auch bei der Hinterachse 106 angewendet werden kann. Diese mechanische Anordnung ähnelt dem auf. Fig. 14 dargestellten Ausführungsbeispiel. Der Kreuzverbinder 35 ist um die Nickachse 34 drehbar mit der Karosserie 2 verbunden. Der Hauptkörper 15 ist um die Lenkachse 8 drehbar an den Kreuzverbinder 35 angelenkt.

Bei einer solchen Anordnung ist es möglich, den Nickwinkel 18 zu verändern und die Lenkeinheit 9 gleichzeitig in Bezug auf die Räder 14 und in Bezug auf die Karosserie 2 zu verdrehen. Der Vorteil dieser Lösung besteht darin, dass die Verdrehung keinen Widerstand erzeugt und mit nur geringen Kräften und Drehmomenten durchführbar ist.

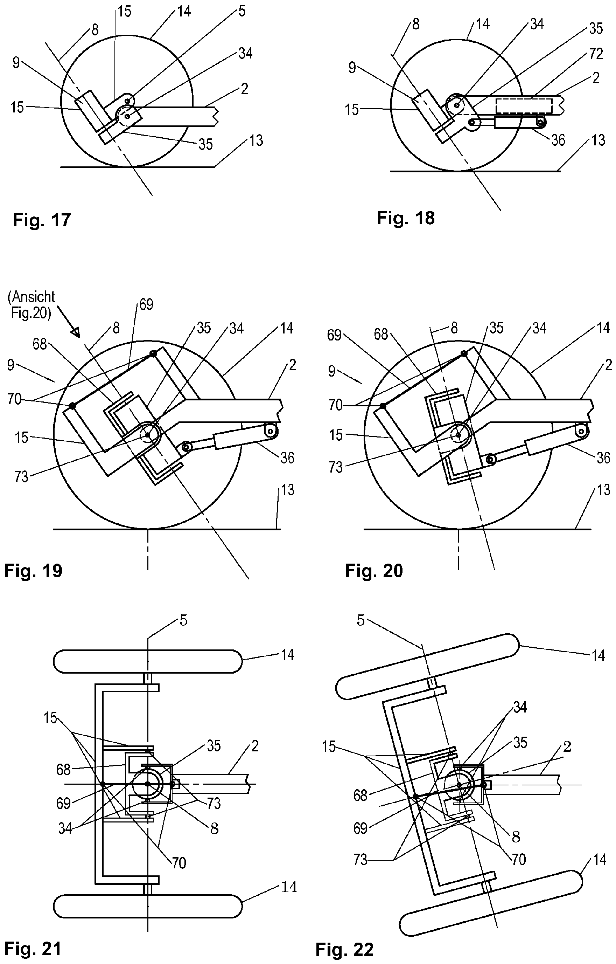

### 9. Ausführungsbeispiel: Nickachse tiefer als die lenkende Radachse (Fig.17)

**Fig. 17** zeigt ein Ausführungsbeispiel, bei dem sich die Nickachse 34 sich näher an der Fahrbahn 13 als die lenkende Radachse 5 erstreckt. Es versteht sich, dass die grundlegende Idee auch bei der Hinterachse 106 angewendet werden kann. Dadurch wird eine besonders stabile Lage der Lenkeinheit 9 erreicht. Aufgrund der Statik des Fahrzeugs 1 wird in Lagen außerhalb einer solchen stabilen Lage immer ein resultierendes Drehmoment um die Nickachse 34 erzeugt. Dieses Drehmoment zwingt die Lenkeinheit 9 in die stabile Lage und stellt einen optimalen, neutralen Nickwinkel 18, bei dem alle Kräfte im Fahrzeug im Gleichgewicht sind.

### 10. Ausführungsbeispiel: Regelung des Nickwinkels (Fig.18)

**Fig. 18** zeigt eine vorteilhafte Lösung für die Einstellung des Nickwinkels 18. Eine Signalverarbeitungs- und Steuereinheit 72 erhält Sensorsignale mit Informationen über den Fahrzeugzustand, beispielsweise die Fahrgeschwindigkeit, den aktuellen Nickwinkel 18, den aktuellen Lenkwinkel 19 und/oder die Neigung 27. Die Signale der Sensoren (nicht dargestellt) werden mittels der Signalverarbeitungseinheit 72 auswertet. Aus den Signalen wird ein optimales Verhältnis zwischen den Parametern, die den Fahrzeugzustand beschreiben, ermittelt. Hierzu können Datenbanken, Kurven, Gleichungen und lernende Systeme eingesetzt werden. Die Ergebnisse können kontinuierlich oder in diskreten zeitlichen Intervallen errechnet werden. Da der Lenkwinkel 19 vom Fahrer 11 vorgegeben wird, wird insbesondere der Nickwinkel 18 an die jeweiligen dynamischen Verhältnisse anpasst. Hierzu sind aktive Regler und Aktuatoren 36 vorgesehen, die entsprechend einem von der Steuereinheit erzeugten Steuersignal eingestellt werden.

Beispielsweise wird in Abhängigkeit von der Geschwindigkeit und des Lenkwinkels 19 berechnet, welcher Nickwinkel 18 eine optimale und stabile Lage auf der Fahrbahn 13 gewährleistet. Dieser so errechnete Winkel wird anschließend über den dafür vorgesehenen Aktuator 36 eingestellt. Die Regelung kann das Fahrgeschehen in Echtzeit überwachen und den Nickwinkel 18 nachstellen oder aber den Nickwinkel 18 in Anhängigkeit von voreingestellten fein- oder grob verteilten Geschwindigkeitsbereichen einstellen, so dass eine optimale Ausgangsbasis für eventuelle Lenkmanöver gegeben ist.

### 11. Ausführungsbeispiel: Dynamische Einstellung des Nickwinkels (Fig.19 bis 22)

**Fig. 19** zeigt eine vorteilhafte Lösung für die dynamische Einstellung des Nickwinkels 18. Es versteht sich, dass die grundlegende Idee auch bei der Hinterachse 106 angewendet werden kann. Bei diesem Ausführungsbeispiel wird ein weiteres Kreuzverbinder-Element 68 vorgesehen, welches mit dem ersten Kreuzverbinder 35 drehbar verbunden ist. In dieser Lösung werden die Karosserie 2 und die Lenkeinheit 9, bzw. deren Hauptkörper 15, über drei unabhängige Drehachsen in Reihe verbunden. Diese sind die Nickachse 34, die Lenkachse 8 und eine weitere ausgleichende Nickachse 73. Der Kreuzverbinder 35 ist um die Nickachse 34 drehbar mit der Karosserie 2 verbunden und um die Lenkachse 8 drehbar mit dem zweiten Kreuzverbinder 68 verbunden. Der zweite Kreuzverbinder 68 ist um die ausgleichende Nickachse 73 drehbar mit dem Hauptkörper 15 verbunden.

In der Neutralstellung sind die Nickachse 34 und die ausgleichende Nickachse 73 vorzugsweise koaxial. Diese Anordnung ermöglicht die unabhängige Verstellung des Kreuzverbinders 35 und hiermit des Nickwinkels 18 der Lenkachse 8 um die Nickachse 34, ohne dass die Lenkeinheit 9 eine relative Bewegung zur Karosserie erfahren muss, wie dies bei einem einzelnen Kreuzverbinder der Fall wäre. Diese Verstellung ist auf Fig. 19 und 20 an zwei beispielhaften Positionen gut zu erkennen.

Die Beweglichkeit der Kreuzverbinder 35 und 68 um beide Nickachsen 34 und 73 wird vorzugsweise unterbunden. Dies wird durch einen, wie bereits im 10. Ausführungsbeispiel dargestellten, Aktuator 36 erreicht. Dadurch wird eine definierte Lage der Kreuzverbinder 35 und 68 und hiermit ein definierter Nickwinkel 18 gewährleistet. Auf **Fig. 19 und 20** ist er mit dem Kreuzverbinder 35 drehbar verbunden und wird zusätzlich an der Karosserie 2 drehbar gelagert. Es versteht sich, dass der Aktuator 36 die gleiche Wirkung bei einer Anbindung an Kreuzverbinder 68 und Lenkeinheit 9 erreichen kann. Der vorgestellte Aktuator 36 wird in Form eines Linearantriebs dargestellt. Dieser kann mechanischer, elektromechanischer, hydraulischer oder pneumatischer Art sein. Es versteht sich, dass für die gleiche Wirkung jede andere Art von Antrieb einsetzbar ist, solange der gewünschte Nickwinkel eingestellt werden kann. Beispielsweise kann auch ein Rotationsantrieb vorgesehen werden, welcher direkt in einer der Nickachsen 34 oder 73 integriert wird.

Eine weitere einfache Möglichkeit ist der Antrieb durch mechanische Kraft, bspw. Seilzug oder Zugstäbe, Gelenke, Hebeln und vergleichbare Elemente. Diese können mit weiteren Stellgliedern verbunden werden, welche seitens des Fahrers betätigbar sind. Dadurch wird der Nickwinkel 18 direkt durch Muskelkraft seitens des Fahrers 11 eingestellt.

Um eine definierte Lage zwischen Lenkeinheit 9 und Karosserie 2 zu erreichen, werden beide über einen Stab 69 verbunden (Fig. 19 bis 22). Dieser Stab 69 ist mittels Kugelgelenken 70 jeweils an der Lenkeinheit 9 und an der Karosserie 2 angebunden. Er stellt sicher, dass das ansonsten statisch unterbestimmte kinematische System, bestehend aus Karosserie 2 und Lenkeinheit 9, verbunden über beide Kreuzverbinder 35 und 68, in Bezug auf die Nickachsen 34 und 73 statisch bestimmt ist. In der neutralen Fahrzeuglage ist es hiermit nicht möglich, die Lenkeinheit 9 in Bezug auf die Karosserie 2 zu verstellen, selbst wenn die Kreuzverbinder 35 und 68 beweglich wären oder unterschiedliche Positionen einnehmen. Die Kugelgelenke 70 an beiden Enden des Stabs 69 erlauben gleichzeitig eine Verdrehung der Lenkeinheit 9 um die Lenkachse 8. Bei einem Abbiegevorgang, wie auf Fig. 22 dargestellt, sorgt der Stab 69 für eine definierte räumliche Zuordnung zwischen Lenkeinheit 9 und Karosserie 2. Aufgrund der Kinematik im System verändert sich jedoch die Neigung der Lenkeinheit 9 in Bezug auf die Fahrbahn 13 geringfügig.

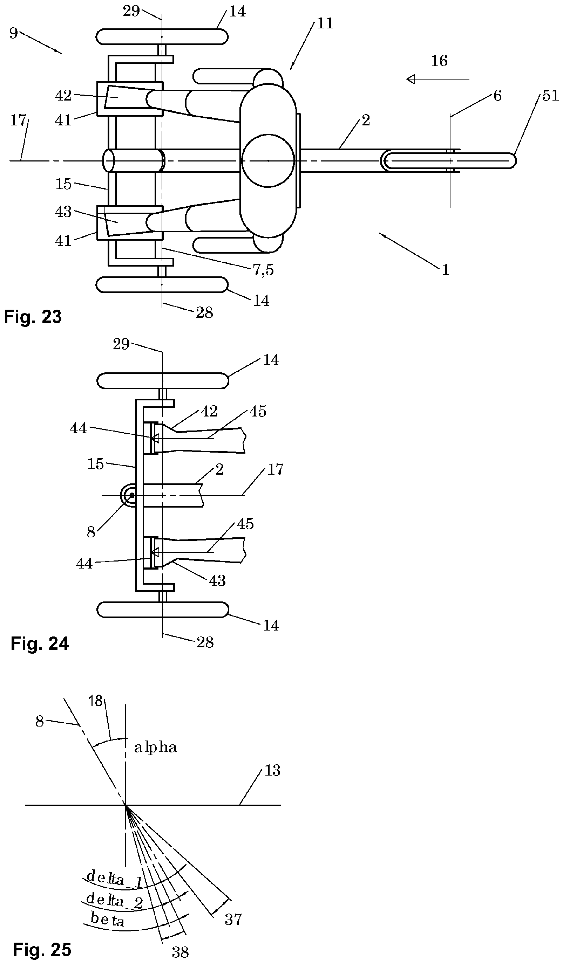

### 12. Ausführungsbeispiel: Kopplung des Nickwinkels an die Antriebs- und Bremskraft (Fig.25)

Die Änderung des Nickwinkels 18 kann alternativ oder ergänzend entweder direkt durch den Fahrer 11 oder durch einen Aktuator 36 an Änderungen der Antriebskraft des Fahrzeugs 1 und/oder die ausgeübte Bremskraft gekoppelt werden. Anstatt einer Verstellung des Nickwinkels in Abhängigkeit von ausgewerteten Parametern, wie in Ausführungsbeispiel 10 dargelegt, wird der Nickwinkel 18 als Einflussgröße für die wirkenden Kräfte am Fahrzeug zugrunde gelegt.

Ein erster Verstellbereich 37 des Nickwinkels 18 kann dabei mit der Antriebskraft korreliert werden und ein anderer Verstellbereich 38 des Nickwinkels 18 kann mit der Bremskraft korreliert. Die Verstellbereiche sind in **Fig. 25** illustriert. Bei einem Nickwinkel 18 von **alpha** welcher den neutralen Zustand definiert, würde ein Nickwinkel 18 größer als **alpha+delta_1,** wobei **delta_1** als Schwellenwert gilt und ≥0 beträgt, mit einer Erhöhung der Antriebskraft korrelieren. Diese Korrelation kann linearer, kontinuierlicher, diskreter oder anderer Natur sein und hängt von Faktoren wie den gewünschten dynamischen Eigenschaften, dem Bedienungskonzept etc. ab. Analog dazu, korreliert ein Nickwinkel 18 kleiner als **alpha-delta_2,** wobei **delta_2** als Schwellenwert gilt und ≥0 beträgt, mit der Bremswirkung am Fahrzeug 1. Der Nickwinkel-Bereich zwischen **alpha-delta_2** und **alpha+delta_1** führt zu keinen gewünschten Änderungen in der Längskinematik und wird als Toleranzbereich verstanden, um beispielsweise Toleranzen bei der Fahrbedienung auszugleichen.

Denkbar ist es ebenfalls, einen Nickwinkelbereich **beta** innerhalb des Bremsbereichs 38 zu definieren, welcher sich unterhalb von **alpha-delta_2** befindet und mit einer Energierekuperation zusammenhängt, welche als Nachfolgeeffekt eine Bremswirkung inne hat. Auch dies ist in **Fig. 25** zu erkennen. In Bereichen unterhalb oder aber auch überlagernd mit diesem genannten Nickwinkelbereich **beta** kann eine normale Bremswirkung entfaltet werden.

Alternativ ist vorgesehen, dass beide Bereiche vertauscht werden, so dass ein Nickwinkel 18 größer als **alpha+delta_1** mit der Bremswirkung korreliert und ein Nickwinkel 18 kleiner als **alpha-delta_2** mit der Antriebswirkung korreliert.

Wie bereits anhand von **Fig. 15** beschrieben, würde sich bei einer zweiten, alternativen Anordnung des Kreuzverbinders zwischen Hauptkörper 15 und Karosserie 2 nur eine geringe Änderung des Nickwinkels 18 im Vergleich zu der Ausgestaltung nach **Fig. 14** ergeben. Man kann den Nickwinkel hier als nahezu konstant betrachtet. Da sich der Hauptkörper 15 trotzdem um die Nickachse 34 drehen lässt, kann die Lage des Hauptkörpers 15 in Bezug auf die Karosserie 2 ebenfalls mit den am Fahrzeug 1 wirkenden Kräften gekoppelt werden. Die Lage kann analog zum Nickwinkel 18 als Winkel mit Winkelbereichen 37 und 38 beschrieben werden. Diese Winkelbereiche hängen mit der Antriebs- oder mit der Bremskraft am Fahrzeug 1 zusammen. Diese Wirkung lässt sich ebenfalls mit der Lösung von **Fig. 16** realisieren.

### 13. Ausführungsbeispiel: Ausgestaltung der Lenkeinheit (Fig.23)

Die Position des Fahrers 11 innerhalb des Fahrzeugs 1 ist vorwiegend aufrecht. Dem Fahrer 11 ermöglicht dies eine gute Übersicht über das Fahrgeschehen. Dies ist in **Fig. 1** von der Seite gut dargestellt. Auf **Fig. 23** wird eine Draufsicht dieser Lösung abgebildet. Für die Füße 42 und 43 des Fahrers 11 sind Fußablageelemente 41 vorgesehen. Die Fußablageelemente 41 nehmen auftretende Bein-/Fuß-/Gewichtskräfte auf.

Die Lenkeinheit 9 umfasst speziell für die Aufnahme von Kräften ausgebildete Kraftaufnahmeelemente 44. Diese sind in **Fig. 23 und 24** zu erkennen. Diese Kraftaufnahmeelemente 44 sind im vorliegenden Ausführungsbeispiel als ebene Flächen oder hervorgehobene Bereiche ausgebildet, welche die Füße 42 und 43 des Fahrers 11 aufnehmen. Die Kraftaufnahmeelemente 44 übertragen Kräfte des Fahrers 11 auf die Lenkeinheit 9. Der Fahrer übt damit ein Drehmoment auf die Lenkeinheit 9 um die Lenkachse 8 aus. Das Drehmoment bewirkt eine Drehung der Lenkeinheit 9 relativ zur Karosserie 2 entsprechend dem gewünschten Lenkmanöver.

Die Kraftaufnahmeelemente 44 sind im vorliegenden Ausführungsbeispiel Bestandteile des Hauptkörpers 15 sein. Es sind ferner optional rutschfeste Kontaktelemente und begrenzende Umlaufwände vorgesehen. Alternativ können auch nur lokale, nicht die komplette Sohle abdeckende Kontaktbereiche vorgesehen sein.

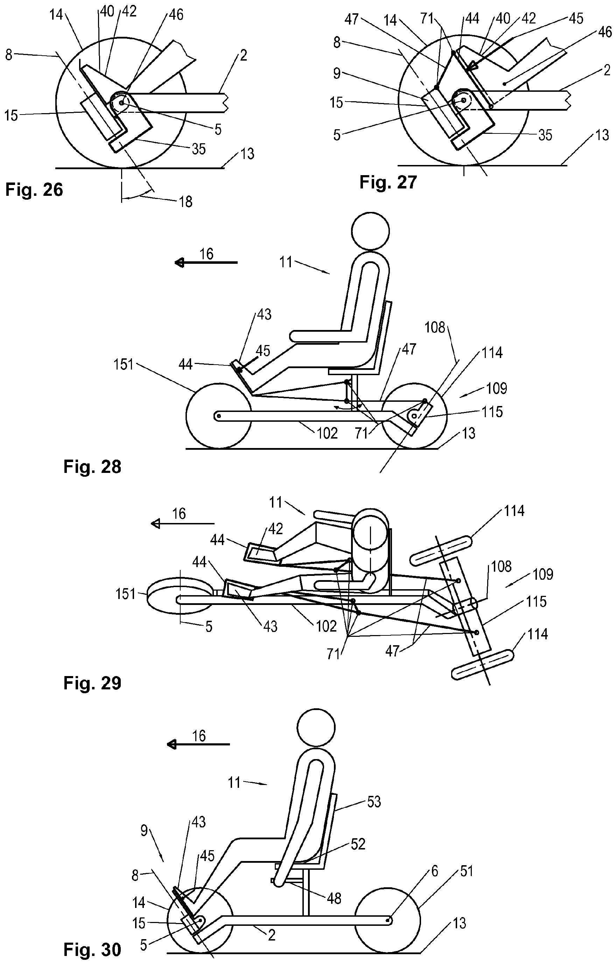

### 14. Ausführungsbeispiel: Indirekte Steuerung der Lenkeinheit mittels Fuß (Fig. 27)

Eine alternative Lösung zu der in **Fig. 23 und 24** gezeigten Anordnung sieht vor, die Kraftaufnahmeelemente 44 als separate Körper auszubilden, welche an der Karosserie 2 aufgenommen sind. Über nachgelagerte Übersetzungsglieder 47 werden die Fußkräfte 45 auf die Lenkeinheit 9 übertragen. Die Übersetzungsglieder 47 können mechanisch, hydraulisch oder elektromechanisch arbeiten. Die Fußkräfte 45 erzeugen und halten ein Drehmoment um die Lenkachse 8. Auf der **Fig. 27** ist dies beispielhaft als mechanische Übersetzung gelöst.

### 15. Ausführungsbeispiel: Einstellung der Nickachse mit dem Fuß (Fig. 26)

Bei Ausführungsbeispielen mit einstellbarer Nickachse 34 kann durch die Ausübung eines Drehmoments mit dem Fuß um das jeweilige Fußgelenk, ein Drehmoment um die Nickachse 34 erzeugt werden. Der Nickwinkel 18 wird direkt durch Einwirkung einer Muskelkraft des Fahrers 11 eingestellt. Dies ist in **Fig. 26** illustriert. Die Füße 40, 42 und 43 des Fahrers 11 ruhen auf dem Hauptkörper 15. Die Drehachse 46 des Fußgelenks entspricht etwa der Nickachse 34. Eine Streckung oder Beugung des Fußes 40, 42 und 43 um diese Achse 46 erzeugt dann direkt ein Drehmoment am Hauptkörper 15 und bewirkt dessen Drehung um die Nickachse 34. Es wird keine Kraft und kein Drehmoment auf die lenkenden Räder erzeugt. Die Lage der Karosserie 2 wird dadurch nicht beeinflusst.

Durch die Änderung des Nickwinkels 18 im Ruhezustand oder während der Fahrt ist es möglich, die Lenkachse 8 in Bezug auf die Karosserie 2 und auf die lenkenden Räder 14 zu verstellen. Über eine zusätzliche Abhängigkeit vom Lenkwinkel 19 kann Einfluss auf die Neigung der Karosserie 2 genommen werden. Der Fahrer 11 kann bei höheren Geschwindigkeiten den Nickwinkel 18 größer einstellen und eine direkte Abhängigkeit zwischen Lenkwinkel 19 und Neigung der Karosserie 2 herstellen.

Bei einem Kurvenradius 26 von R und bei einer höheren Geschwindigkeit mit den entsprechend höheren Fliehkräften ist es möglich, eine höheren Neigungswinkel 27 zur Fahrbahn 13 und eine bessere dynamische Lage einzustellen. Eine niedrigere Geschwindigkeit beim gleichen Kurvenradius 26 von R würde eine kleinere Neigung erfordern, so dass der Nickwinkel 18 kleiner eingestellt werden kann.

### 16. Ausführungsbeispiel: Räder mit Radsturz und/oder Radspur (Fig. 10)

Bei einer Lenkeinheit-Ausführung, bei welcher die Räder 14 mit Radsturz und/oder Radspur aufgenommen sind, und sich der Nickwinkel 18 ebenfalls ändern lässt, werden derartige Sturz/Spur-Einstellungen in der Fahrzeug-Neutrallage 20 vorgenommen, dass sie bei Nickwinkel-Positionen bei höheren Geschwindigkeiten eine stabilere Lage der lenkenden Radachse 7 ergeben.

### 17. Ausführungsbeispiel: Steuerung der lenkenden Hinterachse mit den Füßen (Fig. 28)

Die Verbindung zwischen den Kraftaufnahmeelementen 44 über weitere Übersetzungsglieder 47 mit der Lenkeinheit ist insbesondere bei einer lenkenden Hinterachse 106 entsprechend dem zweiten Ausführungsbeispiel vorteilhaft. Der SteuerBereich der Füße 42 und 43 wird mit der hinten liegenden Lenkeinheit 109 zu verbinden. Eine mögliche Lösung ist auf **Fig. 28** abgebildet. Die Kraftaufnahmeelemente 44 sind mechanisch über weitere Übersetzungsglieder 47 mit der Lenkeinheit 109 verbunden. Sie bewirken eine Verstellung der Lenkeinheit 109 zur Karosserie 102. In diesem Ausführungsbeispiel führt eine Kraft vom linken Fuß 43 durch Strecken des linken Beines zu einer Verdrehung der Lenkeinheit 109 um die Lenkachse 108. Dann biegt das Fahrzeug 1 nach rechts ab. Dies ist in Figur 29 gezeigt. Um die Ergonomie bei dem Vorgang zu verbessern, wird die Lage des Kraftaufnahmeelements 44 durch den rechten Fuß 42 ebenfalls beeinflusst. Das bewirkt ein Zurückziehen des rechten Beines. Es entsteht ein gefühltes Zusammenspiel der beiden Beine.

Die Steuerung des Nickwinkels 18 einer lenkenden Hinterachse 106 ist ebenfalls möglich, indem die Kraftaufnahmeelemente 44 zusätzlich drehbar gelagert werden. Ein Drehmoment um die jeweiligen Fußgelenke des Fahrers 11 wird aufgenommen und mittels weiterer Übersetzungsglieder (nicht gezeigt) auf die Lenkeinheit 109 übertragen. Dadurch wird ein Drehmoment um die Nickachse 34 erzeugt.

Es können auch Kraftaufnahmesensoren (nicht abgebildet) in den Kraftaufnahmeelementen 44 integriert sein, welche über weitere Verarbeitungssysteme und Aktuatoren 36 die Veränderung des Nickwinkels 18 der hinteren Lenkeinheit 109 bewirken.

### 18. Ausführungsbeispiel: Vorhandensein von Handgriffen (Fig. 30)

In einer weiteren Lösung werden zusätzlich Handgriffe 48 vorgesehen (**Fig. 30**). Diese werden an einem Lenker 49 angebracht, der an der Karosserie 2 aufgenommen ist. Damit wird dem Fahrer 11 eine bessere Abstützwirkung geboten. Er kann die Reaktionskräfte bei der Ausübung der Beinkräfte, bzw. der Fußkräfte 45, leichter in die Karosserie 2 einleiten, bzw. höhere Bein- oder Fußkräfte 45 entwickeln.

Des Weiteren können an den Handgriffen 48 weitere Elemente vorgesehen werden, welche die Antriebs- oder Bremskraft am Fahrzeug 1 beeinflussen. Beispielsweise handelt es sich um Drehgriffe für den Antrieb oder Bremshebel für die Bremsen.

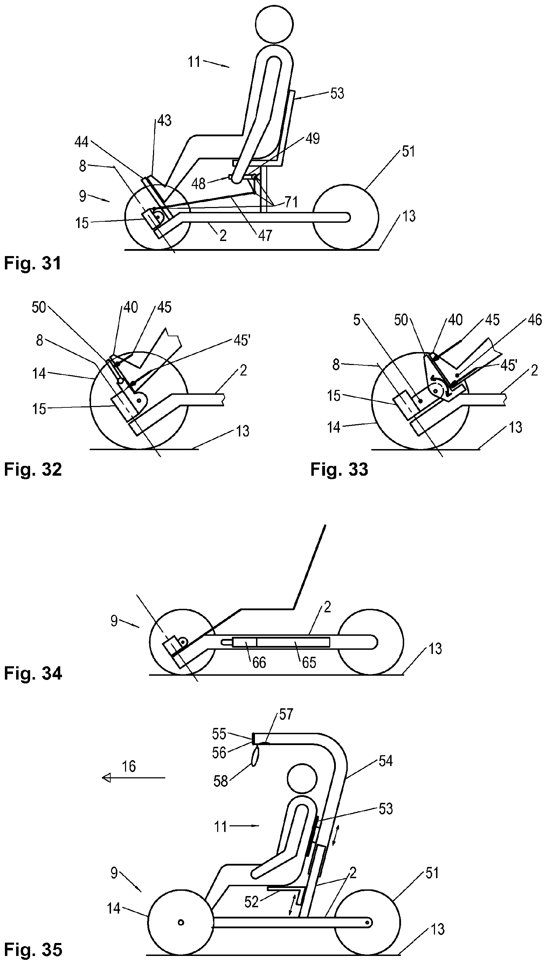

Alternativ ist es möglich, die Handgriffe 48 einzeln oder zusammen über den Lenker 49 beweglich an der Karosserie 2 aufzunehmen, so dass eine Krafteinleitung in die Handgriffe 48 seitens des Fahrers 11 deren relative Bewegung zur Karosserie 2 bewirken. Ferner werden die in die Handgriffe 48 eingeleiteten Kräfte über nachgelagerte Übersetzungsglieder 47 (mechanischer, hydraulischer 5 oder elektromechanischer Natur) auf die Lenkeinheit 9 übertragen und erzeugen oder halten ein Drehmoment um die Lenkachse 8. Alternativ kann ein Drehmoment um die Nickachse 34 erzeugt und gehalten werden. Eine beispielhafte mechanische Lösung ist auf **Fig. 31** dargestellt. Es ergibt sich ein geschlossener Kraftfluss zwischen Füße 40 , 42 , 43, Beine, Körper/Gesäß, Arme/Hände, Handgriffe 48 , Karosserie 2 /Sitz 52 /Rückenlehne 53 und Lenkeinheit 9 , welcher zu einer Änderung des Lenkwinkels 19 oder des Nickwinkels 18 führt.

### 19. Ausführungsbeispiel: Vorhandensein von Pedalen (Fig. 32 und 33)

Um das Fahrzeug 1 zu beschleunigen oder zu bremsen, ist es noch denkbar, separate Bedienelemente 50 an der Lenkeinheit 9 (bei lenkender Vorderachse 5) oder an der Karosserie 2 (bei lenkender Hinterachse 106) vorzusehen, welche eine Kraft seitens der Füße 40 , 42 , 43 des Fahrers 11 aufnehmen. Diese Bedienelemente 50 können mit den Kraftaufnahmeelementen 44 übereinstimmen oder im Kraftfluss zwischen Fuß 40 , 42 ,43 und Kraftaufnahmeelementen 44 positioniert werden. Diese separaten Bedienelemente 50 erzeugen durch weitere Übertragungselemente (bspw. Seilzug, Getriebe, elektromechanische Aktuatoren etc.) eine Antriebs- oder Bremskraft am Fahrzeug 1. Es ist möglich, dass einer der Bedienelemente 50 für die Steuerung der Antriebskraft zuständig ist, während ein anderes Bedienelement 50 für die Steuerung der Bremskraft zuständig ist.

Beispielsweise werden bei einer lenkenden Vorderachse 5 zwei Pedalen am Hauptkörper 15 angebracht (**Fig. 32**). Der linke ist für die Bremswirkung und der rechte für die Antriebskraft zuständig. Die Lenkeinheit 9 weist in diesem Fall vorzugsweise keine zusätzliche Nickachse 34, bzw. wird im Sinne des 11. Ausführungsbeispiels aus **Fig 19 bis 22** ausgeführt. Es ist dadurch möglich, durch das Zusammenspiel der Füße 40 , 42 , 43 die Lenkeinheit 9 um die Lenkachse 8 zu verdrehen und gleichzeitig durch eine weitere kontrollierte Kraftausübung der jeweiligen Füße 40 , 42 , 43 die Antriebs-, bzw. Bremskraft zu regulieren.

Alternativ kann das gleiche Bedienelement 50 für die Steuerung beider Kräfte zugrunde gelegt werden. Bspw. reguliert eine bestimmte Bewegung die Antriebskraft, während eine andere Bewegung die Bremskraft reguliert. Auf **Fig. 33** ist eine mögliche Lösung abgebildet. Das Bedienelement 50 ist um eine Achse drehbar am Hauptkörper 15 aufgenommen. Die Drehbewegung erfolgt in zwei Richtungen. Diese sind jeweils für die Regulierung der Antriebskraft und für die Bremskraft zuständig. Dabei verläuft die Drehachse des Bedienelements 50 parallel zur Vorderachse 5 und das Bedienelement 50 kann durch eine Drehbewegung der Füße 40 , 42 , 43 um die Drehachse 46 zwischen Unterschenkel und Fuß 40 , 42 , 43 gesteuert werden. Eine Drehung des Bedienelements 50 um die genannte Achse in Fahrtrichtung 16 würde die Bremskraft beeinflussen und eine Drehung in die entgegensetzte Richtung würde die Antriebskraft beeinflussen. Die Zuordnung der Kräfte kann auch umgekehrt erfolgen. Eine solche Lösung ist auch möglich, indem, wie bereits beschrieben, der Hauptkörper 15 über die Nickachse 34 mit dem Kreuzverbinder 35 verbunden ist, und der Kreuzverbinder 35 über die Lenkachse 8 mit der Karosserie 2 verbunden ist. Eine Drehung des Hauptkörpers 15 um die Nickachse 34 beeinflusst die Brems- oder die Antriebskraft am Fahrzeug 1 , ohne unbedingt zu einer Verstellung der Lenkachse 8 zu führen.

### 20. Ausführungsbeispiel: Antrieb des Fahrzeugs

Der Antrieb vom erfindungsgemäßen Fahrzeug 1 kann sich koaxial zur Antriebsradachse befinden, beispielsweise in Form eines Radnabenmotors. In diesem Fall wird als Antrieb vorzugsweise ein elektrischer Motor vorgesehen. In diesem Fall ist es noch denkbar, dass man ihn auch in den Lenkeinheit-Rädern 14 integrieren kann. Es ist sogar möglich, dass die Veränderung des Lenkwinkels 19 über eine zwischengeschaltete Steuerungselektronik eine separate Steuerung der Antriebsmomente beider Räder zur Folge hat, um den Lenkvorgang zu unterstützen.

Noch ist es möglich, den Antrieb außerhalb der Antriebsache zu platzieren und die Antriebskraft mittels zwischengeschalteten Getriebes zum Antriebsrad 51 zu übertragen.

Bei letzterer Möglichkeit ist es denkbar, anstatt eines elektrischen Motors einen Verbrennungskraftmotor einzusetzen und diesen mittels Getriebe mit dem Antriebsrad zu verbinden.

### 21. Ausführungsbeispiel: Vorhandensein eines Energiespeichers (Fig. 34)

Das erfindungsgemäße Fahrzeug 1 beinhaltet zusätzlich einen Energiespeicher 4 in Form einer Batterie 65 oder eines Tankbehälters.

Bei einer elektrischen Batterie 65 ist es sehr vorteilhaft, wenn diese als separates Modul ausgeführt ist. Dieses ist vom Fahrzeug 1 entnehmbar. Man kann die Batterie 65 entnehmen und außerhalb vom Fahrzeug 1 aufladen, bspw. zu Hause oder im Büro. Ferner ist es möglich, diese Batterie 65 mit einer bereits aufgeladenen nur auszutauschen, um die Ladezeiten deutlich zu verringern.

Ferner ist es denkbar, die Ladeelektronik 66 der Batterie 65 ebenfalls modular und diese mit der Batterie 65 verbindbar auszuführen (**Fig.34**). Der Fahrzeugführer 11 hat kann die Batterie 65 vom Fahrzeug 1 zu entnehmen und diese auf eine andere Ladestation zu laden. Er kann. mit einer anderen Batterie 65 direkt auszutauschen. Er kann auch die Batterie direkt am Fahrzeug 1 laden, oder die Batterie 65 zusammen mit der Ladeelektronik 66 zu entnehmen und an einem anderen Ort zu laden, wo keine Batterie-Ladestation zur Verfügung steht. Im letzteren Fall ist es sehr vorteilhaft, wenn die Ladeelektronik 66 mit einem handelsüblichen Kaltgerätestecker-Anschluss versehen ist. Dadurch kann sie an die üblichen und fast überall vorhandenen Kaltgerätekabel (wie bspw. für Heimrechner) angeschlossen werden.

Außerdem ist es denkbar, ein Energierekuperationssystem im Fahrzeug 1 zu integrieren, um eine Bremskraft durch den Antrieb zu entwickeln und die erzeugte Energie in die Batterie 65 zu speichern.

### 22. Ausführungsbeispiel: Vorhandensein von Sitz und Rückenlehne (Fig. 35 bis 38)

Es existiert die Möglichkeit, einen Sitz 52 und/oder Rückenlehne 53 für den Fahrer 11 vorzusehen, um einen Teil der Gewichtskraft direkt in die Karosserie 2 aufzunehmen.

Dabei sind diese derart ausgeführt, dass auch seitliche Kräfte zwischen Fahrer 11 und Karosserie 2 übertragen werden können. Auf diese Weise wird die Steuerung vom Fahrzeug 1 erleichtert. Der Fahrer 11 hat bessere Möglichkeiten, die von der entwickelten Bein-/Fußkraft 45 resultierende Gegenkraft gegen die Karosserie 2 abzustützen. Durch den Einsatz nur eines Sitzes 52 hat der Fahrer 11 die Möglichkeit, die Querkomponenten der Bein-/Fußkraft 45 seitlich in den Sitz 52 einzuleiten und eine Verstellung des Lenkwinkels 19 zu bewirken. Beim bereits erwähnten Einsatz von zusätzlichen Handgriffen 48 wird diese Möglichkeit noch verbessert. Der Fahrer 11 kann die Kräfte besser in die Karosserie 2 einleiten. Beim Einsatz einer weiteren Rückenlehne 53 wird die Kraftentfaltung deutlich verbessert. Damit wird die Bein-/Fußkraft 45 in höherem Maße abgestützt. In diesem Falle ist sogar ein Wegfall der Handgriffe 48 denkbar. Der Fahrer 11 bekommt eine stabile Lage innerhalb des Fahrzeugs 1 und kann die Steuerkräfte leicht entfalten. Sofern sich die Karosserie 2 über oder neben dem Fahrer 11 erstreckt, ist es sinnvoll, diesen Karosserieabschnitt 54 in der Höhe verstellbar zu gestalten, so dass optimale Platzverhältnisse für unterschiedliche Fahrergrößen gegeben sind (**Fig.35**). Dies gilt ebenfalls für den Sitz 52 , bzw. für die Rückenlehne 53 , welche separat zum verstellbaren Karosserieabschnitt 54 verstellt werden können.

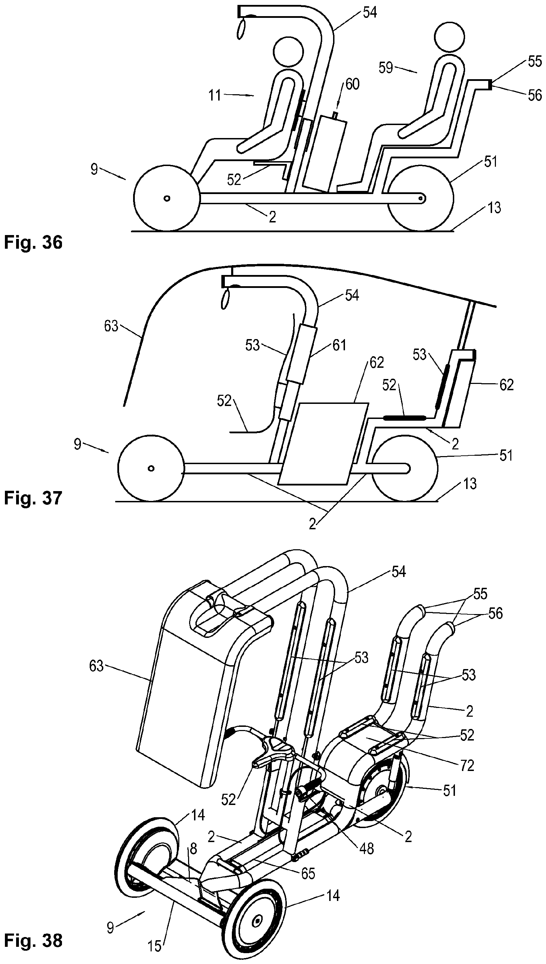

Außerdem ist es sehr vorteilhaft, eine weitere Sitzmöglichkeit für einen weiteren Fahrzeuginsassen 59 vorzusehen (Fig. 36). Dieser Insasse 59 befindet sich vorzugsweise hinter dem Fahrer 11 und nimmt eine möglichst niedrige, jedoch noch bequeme Position ein, um die Trägheitsmomente des gesamten Fahrzeugs 1 bei Neigevorgängen zu minimieren. Für seinen Komfort werden ein weiterer Sitz 52 und separater Lehne 53 vorgesehen.

### 23. Ausführungsbeispiel: Vorhandensein zusätzlicher Peripheriebauteile (Fig. 35)

Denkbar ist es noch, wichtige Grundfunktionen des Fahrzeugs 1 wie Beleuchtung 55 , Blinker 56 , Anzeigeinstrumente 57 oder Rückspiegel 58 in dem verstellbaren Karosserieabschnitt 54 zu integrieren. Auf diese Weise wird deren optimale Anordnung für unterschiedliche Fahrergrößen gewährleistet. Beispielsweise können diese Funktionen in einem sich über dem Kopf des Fahrers 11 erstreckenden Karosserieabschnitt 54 integriert werden. So befinden sie sich im unmittelbaren Sichtfeld des Fahrers 11 (**Fig. 35**).

Zusätzlich ist es vorteilhaft, einen Abstellplatz für Gepäck 60 vorzusehen (**Fig. 36**). Dieser befindet sich vorzugsweise räumlich zwischen dem Fahrer 11 und dem weiteren Insassen 59 und befindet sich ebenfalls möglichst tief innerhalb der Karosserie 2.

Besonders vorteilhaft ist es, im Fahrzeug 1 nur Basisfunktionalitäten für den erfolgreichen urbanen Transport vorzusehen. Diese sind bspw. zulassungsrelevante Funktionen wie Beleuchtung 55 , Blinker 56 , Bremsen und diverse notwendige Anzeigen 57. Das Fahrzeug 1 , bzw. dessen Karosserie 2 , wird dabei als Basis für Erweiterungen konzipiert, welche den Funktionsumfang erweitern. Die Peripherieerweiterungen werden bei Bedarf seitens des Fahrers 11 dazugekauft. Sie werden einfach und ohne besondere Fachkenntnisse zum Fahrzeug 1 hinzugefügt. Beispiele für solche, welche den Umfang nicht ausschöpfen, sind andere Sitze 52 oder Rückenlehnen 53 , Verkleidungsteile, Heizelemente 61 , Kofferraummodule 62 oder Transportboxen/- Taschen 62 , Witterungsschutzbauteile 63 , Schnittstellen für mobile Geräte und viele mehr (**Fig. 37 und 38**).

### 24. Ausführungsbeispiel: Rahmenbauweise des Fahrzeugs (Fig. 38)

Die Karosserie 2 des Fahrzeugs 1 wird vorzugsweise in Rahmenbauweise ausgeführt (**Fig. 38**). Denkbar ist es ebenfalls, die Karosserie 2 als Blechkarosserie oder als einen sich weit erstreckenden Kunststoffkörper auszuführen. Wichtig ist dabei, dass die Karosserie 2 gleichzeitig als tragende Struktur und als Designmerkmal des Fahrzeugs 1 gestaltet ist. So wird auf den Einsatz von weiteren Verkleidungsbauteilen verzichtet. Es werden möglichst viele Funktionen mit möglichst wenigen Bauteilen umgesetzt und die Kosten des Fahrzeugs 1 bleiben minimal.

Die oben erläuterten Ausführungsbeispiele dienen der Illustration der in den Ansprüchen beanspruchten Erfindung. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

## Patentansprüche

1. Fahrzeug (1; 201), enthaltend
(a) eine selbsttragende Karosserie , d.h. eine Karosserie mit einem tragenden Rahmen oder eine andere tragende Struktur (2; 202), mit einer sich in Fahrtrichtung (16) erstreckenden Fahrzeuglängsachse (21);
(b) eine erste (5; 205) und eine zweite Radachse (6; 206), wobei wenigstens eine der Radachsen (5; 205) zwei Räder (14) aufweist;
(c) eine um eine Lenkachse (8; 208) drehbare Lenkeinheit (9; 209) zum Lenken des Fahrzeugs (1; 201), die mit der ersten Radachse (5; 205) verbunden ist, wobei die Lenkachse (8; 208) in einer Ebene (17) senkrecht zur ersten Radachse (5; 205) um einen Nickwinkel (18) gegenüber der Vertikalen geneigt ist, der ungleich Null und kleiner als 90° ist; wobei
(d) die Lenkachse (8; 208) oberhalb der ersten Radachse (5; 205) in der Ebene (17) senkrecht zur ersten Radachse (5; 205) in einer Richtung vom Fahrzeug (1; 201) weg gerichtet ist; wobei
(e) die tragende Struktur (2; 202) um die Lenkachse (8; 208) drehbar mit der Lenkeinheit (9; 209) verbunden ist, wobei
(f) die tragende Struktur (2; 202) und die Lenkeinheit (9; 209) derart ausgestaltet sind, dass von einem von der tragenden Struktur (2; 202) gestützten Fahrer (11) ein Drehmoment auf die Lenkeinheit (9; 209) ausübbar ist; und wobei
(g) die erste Radachse (5; 205) die vordere Radachse (5; 205) ist und zwei Räder aufweist; **gekennzeichnet durch**
(h) ein Lager (67) zur drehbaren Lagerung der Lenkeinheit (9; 209) mit einer sich parallel zur vorderen Radachse (5; 205) erstreckenden Nickachse (34), so dass die Lenkachse (8; 208) mit der in der Ebene (17) senkrecht zur vorderen Radachse (5; 205) liegenden Vertikalen den Nickwinkel (18) bildet,
(i) elektronische und/oder mechanische und/oder hydraulische Mittel zum dynamischen Einstellen des Nickwinkels während der Fahrt.

2. Fahrzeug (1; 201) nach Anspruch 1, **dadurch gekennzeichnet, dass** die Lenkeinheit (9; 209) starr mit der ersten Radachse (5; 205) verbunden ist.

3. Fahrzeug (1; 201) nach Anspruch 1 oder 2, **dadurch gekennzeichnet, dass** die zwei Räder (14) der ersten Radachse (5; 205) in gleicher Weise mit der Lenkeinheit (9; 209) lenkbar sind.

4. Fahrzeug (1; 201) nach einem der vorgehenden Ansprüche, **dadurch gekennzeichnet, dass** das Lager (67) zur drehbaren Lagerung der Lenkeinheit (9; 209) von einem Kreuzverbinder (35) gebildet ist, welcher eine Drehung der Lenkeinheit (9; 209) um die Nickachse und eine Drehung der Lenkeinheit (9; 209) um die Lenkachse (8; 208) zulässt.

5. Fahrzeug (1; 201) nach einem der Ansprüche 1 bis 3, **dadurch gekennzeichnet, dass** das Lager (67) zur drehbaren Lagerung der Lenkeinheit (9; 209) von zwei zueinander drehbar gelagerten Kreuzverbindern (35,68) gebildet ist, welche eine Drehung der Lenkeinheit (9; 209) um die Lenkachse (8; 208) zulassen.

6. Fahrzeug (1; 201) nach einem der vorgehenden Ansprüche, **dadurch gekennzeichnet, dass** elektronische Mittel zum Einstellen des Nickwinkels (18) vorgesehen sind, welche Mittel Sensoren zum Erfassen des Fahrzeugzustands und Signalverarbeitungsmittel zur Erzeugung eines Steuersignals zur Steuerung des Nickwinkels (18) der Lenkachse (8; 208) nach Maßgabe des erfassten Fahrzeugzustands umfassen.

7. Fahrzeug (1; 201) nach Anspruch 6, **dadurch gekennzeichnet, dass** weitere mechanische, hydraulische, pneumatische oder elektromechanische Stellglieder (36) zum Einstellen des Nickwinkels (18) vorgesehen sind.

8. Fahrzeug (1; 201) nach einem der vorgehenden Ansprüche, **dadurch gekennzeichnet, dass** mechanische Mittel zum Einstellen des Nickwinkels (18) vorgesehen sind, welche wenigstens ein Pedal (50), einen Griff (48) oder einen anderen mechanischen hand- oder fußbetätigten Aktuator (41; 44; 47) umfassen, dessen Positionsänderung eine Änderung des Nickwinkels (18) der Lenkachse (8; 208) bewirkt.

9. Fahrzeug (1; 201) nach einem der vorgehenden Ansprüche, **gekennzeichnet durch** Mittel zum Fixieren des eingestellten Nickwinkels (18).

10. Fahrzeug (1; 201) nach einem der vorgehenden Ansprüche, **gekennzeichnet durch** einen Antrieb (51;151) und einen Energiespeicher (65) zur Versorgung des Antriebs (51;151) mit Energie.

11. Fahrzeug (1; 201) nach einem der vorgehenden Ansprüche, **dadurch gekennzeichnet, dass** die tragende Struktur (2; 202) von Rohren gebildet ist.

12. Fahrzeug (1; 201) nach einem der vorgehenden Ansprüche, **gekennzeichnet durch** Sitze (52), Lehnen (53), Griffe (48), Gepäckablagen (60), Verkleidungsteile (63) und/oder andere Komponenten (54, 61, 62), welche an der tragenden Struktur (2; 202) vorgesehen sind.

13. Fahrzeug (1; 201) nach einem der vorgehenden Ansprüche, **dadurch gekennzeichnet, dass** die Lenkeinheit (9; 209) mit den Füßen (40,42,43) des Fahrers (11) betätigbar ist.

14. Fahrzeug (201) nach einem der vorgehenden Ansprüche, **gekennzeichnet durch** eine weitere Lenkeinheit (209') zum Lenken der zweiten Radachse (206).

15. Fahrzeug (101), enthaltend
(a) eine selbsttragende Karosserie, d.h. eine Karosserie mit einem tragenden Rahmen oder eine andere tragende Struktur (102), mit einer sich in Fahrtrichtung (16) erstreckenden Fahrzeuglängsachse (21);
(b) eine erste (105) und eine zweite Radachse (106), wobei wenigstens eine der Radachsen (105, 106) zwei Räder (114) aufweist;
(c) eine um eine Lenkachse (108) drehbare Lenkeinheit (109) zum Lenken des Fahrzeugs (101), die mit der zweiten Radachse (206) verbunden ist, wobei die Lenkachse (108) in einer Ebene (17) senkrecht zur zweiten Radachse (106) um einen Nickwinkel (118) gegenüber der Vertikalen geneigt ist, der ungleich Null und kleiner als 90° ist; wobei
(d) die Lenkachse (108) oberhalb der zweiten Radachse (106) in der Ebene (17) senkrecht zur zweiten Radachse (106) in einer Richtung vom Fahrzeug (101) weg gerichtet ist; wobei
(e) die tragende Struktur (102) um die Lenkachse (108) drehbar mit der Lenkeinheit (109) verbunden ist; wobei
(f) die tragende Struktur (102) und die Lenkeinheit (109) derart ausgestaltet sind, dass von einem von der tragenden Struktur (102) gestützten Fahrer (11) ein Drehmoment auf die Lenkeinheit (109) ausübbar ist; wobei
(g) die zweite Radachse (106) die hintere Radachse (106) ist und zwei Räder (114) aufweist; **gekennzeichnet durch**
(h) ein Lager (67) zur drehbaren Lagerung der Lenkeinheit (109) mit einer sich parallel zur hinteren Radachse (106) erstreckenden Nickachse (34), so dass die Lenkachse (108) mit der in derEbene(17) senkrecht zur hinteren Radachse (106) liegenden Vertikalen den Nickwinkel (118) bildet;
(i) elektronische und/oder mechanische und/oder hydraulische Mittel zum dynamischen Einstellen des Nickwinkels während der Fahrt, und
(j) eine mechanische Verbindung zwischen Kraftaufnahmeelementen (44) über weitere Übersetzungsglieder (47) mit der hinten liegenden Lenkeinheit (109), welche Verbindung ein Steuerbereich der Füße (40, 42, 43) des Fahrers (11) mit der Lenkeinheit (109) derart verbindet, so dass eine Verstellung der Lenkeinheit (109) zur Karosserie (102) erfolgt.

## Claims

1. Vehicle (1; 201) comprising
(a) a self-supporting body, i.e. a body with a supporting frame or another supporting structure (2; 202), with a vehicle longitudinal axis (21) extending in the direction of travel (16);
(b) a first (5; 205) and a second wheel axle (6; 206), at least one of the wheel axles (5; 205) having two wheels (14);
(c) a steering unit (9; 209) rotatable about a steering axis (8; 208) for steering the vehicle (1; 201), which is connected to the first wheel axis (5; 205), the steering axis (8; 208) being inclined in one plane (17) perpendicular to the first wheel axis (5; 205) by a pitch angle (18) with respect to the vertical axis, which angle is not equal to zero and less than 90 °; wherein
(d) the steering axis (8; 208) is directed above the first wheel axis (5; 205) in the plane (17) perpendicular to the first wheel axis (5; 205) in a direction remote from the vehicle (1; 201); wherein
(e) the supporting structure (2; 202) is rotatably connected to the steering unit (9; 209) about the steering axis (8; 208), wherein
(f) the supporting structure (2; 202) and the steering unit (9; 209) are designed in such a way that a driver (11) supported by the supporting structure (2; 202) can exert a torque on the steering unit (9; 209); and wherein
(g) the first wheel axle (5; 205) is the front wheel axle (5; 205) and has two wheels; **characterised by**
(h) a bearing (67) for the rotatable mounting of the steering unit (9; 209) with a pitch axis (34) extending parallel to the front wheel axis (5; 205), so that the steering axis (8; 208) and the vertical axis lying in the plane (17) perpendicular to the front wheel axis (5; 205) form the pitch angle (18),
(i) electronic and / or mechanical and / or hydraulic means for the dynamic adjustment of the pitch angle while driving.

2. Vehicle (1; 201) according to Claim 1, **characterized in that** the steering unit (9; 209) is rigidly connected to the first wheel axle (5; 205).

3. Vehicle (1; 201) according to Claim 1 or 2, **characterized in that** the two wheels (14) of the first wheel axle (5; 205) are steerable in the same way by the steering unit (9; 209).

4. Vehicle (1; 201) according to one of the preceding claims, **characterized in that** the bearing (67) for the rotatable mounting of the steering unit (9; 209) is formed by a cross connector (35) which enables a rotation of the steering unit (9; 209) around the pitch axis and a rotation of the steering unit (9; 209) about the steering axis (8; 208).

5. Vehicle (1; 201) according to one of Claims 1 to 3, **characterized in that** the bearing (67) for the rotatable mounting of the steering unit (9; 209) is formed by two cross connectors (35, 68) which are rotatably mounted relative to one another and which enable a rotation of the steering unit (9; 209) about the steering axis (8; 208).

6. Vehicle (1; 201) according to one of the preceding claims, **characterized in that** electronic means are provided for adjusting the pitch angle (18), which means comprise sensors for detecting the vehicle state and signal processing means for generating a control signal for controlling the pitch angle (18) of the steering axis (8; 208) in accordance with the detected vehicle state.

7. Vehicle (1; 201) according to Claim 6, **characterized in that** further mechanical, hydraulic, pneumatic or electromechanical actuators (36) are provided for adjusting the pitch angle (18).

8. Vehicle (1; 201) according to one of the preceding claims, **characterized in that** mechanical means for adjusting the pitch angle (18) are provided which include at least a pedal (50), a handle (48) or another mechanical hand or foot-operated actuator (41; 44; 47), whose change in position causes a change in the pitch angle (18) of the steering axis (8; 208).

9. Vehicle (1; 201) according to one of the preceding claims, **characterized by** means for fixing the adjusted pitch angle (18).

10. Vehicle (1; 201) according to one of the preceding claims, **characterized by** a drive (51; 151) and an energy storage (65) for supplying the drive (51; 151) with energy.

11. Vehicle (1; 201) according to one of the preceding claims, **characterized in that** the supporting structure (2; 202) is formed by tubes.

12. Vehicle (1; 201) according to one of the preceding claims, **characterized by** seats (52), backrests (53), handles (48), luggage racks (60), trim parts (63) and / or other components (54, 61, 62) which are provided at the supporting structure (2; 202).

13. Vehicle (1; 201) according to one of the preceding claims, **characterized in that** the steering unit (9; 209) can be actuated with the feet (40, 42, 43) of the driver (11).

14. Vehicle (201) according to one of the preceding claims, **characterized by** a further steering unit (209 ') for steering the second wheel axle (206).

15. Vehicle (101), comprising
(a) a self-supporting body, i.e. a body with a supporting frame or another supporting structure (102), with a vehicle longitudinal axis (21) extending in the direction of travel (16);
(b) a first (105) and a second wheel axle (106), at least one of the wheel axles (105; 106) having two wheels (114);
(c) a steering unit (109) rotatable about a steering axis (108) for steering the vehicle (101), which is connected to the second wheel axis (106), the steering axis (108) being inclined in one plane (17) perpendicular to the second wheel axis (106) by a pitch angle (118) with respect to the vertical axis, which angle is not equal to zero and less than 90 °; wherein
(d) the steering axis (108) is directed above the second wheel axis (106) in the plane (17) perpendicular to the second wheel axis (106) in a direction remote from the vehicle (101); wherein
(e) the supporting structure (102) is rotatably connected to the steering unit (109) about the steering axis (108), wherein
(f) the supporting structure (102) and the steering unit (109) are designed in such a way that a driver (11) supported by the supporting structure (102) can exert a torque on the steering unit (109); and wherein
(g) the second wheel axle (106) is the rear wheel axle (5; 205) and has two wheels (114); **characterised by**
(h) a bearing (67) for the rotatable mounting of the steering unit (109) with a pitch axis (34) extending parallel to the rear wheel axis (106), so that the steering axis (108) and the vertical axis lying in the plane (17) perpendicular to the rear wheel axis (106) form the pitch angle (118),
(i) electronic and / or mechanical and / or hydraulic means for the dynamic adjustment of the pitch angle while driving, and
(j) a mechanical connection between force receiving elements (44) via further transmission members (47) with the steering unit (109) at the rear, which connection connects a control range of the driver's (11) feet (40, 42, 43) to the steering unit (109) in such a way that the steering unit (109) is adjusted in relation to the vehicle body (102).

## Revendications

1. Véhicule (1; 201), contenant
(a) une carrosserie autoportante, c'est-à-dire une carrosserie avec un chassis ou une autre structure porteuse (2; 202), avec l'axe longitudinal du véhicule (21) dirigé dans le sens du déplacement (16);
(b) un premier (5; 205) et un deuxième essieu de roue (6; 206), au moins l'un des essieux de roues (5; 205) comportant deux roues (14);
(c) une unité de direction (9; 209) pouvant roter autour de l'axe de direction (8; 208) pour diriger le véhicule (1; 201), qui est reliée au premier essieu de roue (5; 205), l'axe de direction (8; 208) étant incliné dans un plan (17) perpendiculaire au premier essieu de roue (5; 205) d'un angle d'inclinaison (18) par rapport à la verticale, lequel angle est différent zéro et inférieur à 90° ; dans laquelle
(d) l'axe de direction (8; 208) est dirigé au-dessus du premier essieu de roue (5; 205) dans le plan (17) perpendiculaire au premier essieu de roue (5; 205) dans un sens s'éloignant du véhicule (1; 201) ; dans laquelle
(e) la structure porteuse (2; 202) est reliée de manière rotative autour de l'axe de direction (8; 208) à l'unité de direction (9; 209) ; dans laquelle
(f) la structure porteuse (2; 202) et l'unité de direction (9; 209) sont conçues de telle manière qu'un conducteur (11) supporté par la structure porteuse (2; 202) puisse exercer un couple sur l'unité de direction (9; 209); et dans laquelle
(g) le premier essieu de roue (5; 205) est l'essieu de roue avant (5; 205) et comporte deux roues; **caractérisé par:**
(h) un palier (67) pour supporter de façon tournante de l'unité de direction (9; 209), avec un axe de tangage (34) s'étendant parallèlement à l'essieu de roue avant (5; 205), de sorte que l'axe de direction (8; 208) et l'axe vertical situé dans le plan (17) perpendiculaire à l'essieu de roue avant (5; 205) forment l'angle de tangage (18),
(i) des moyens électroniques et/ou mécaniques et/ou hydrauliques pour le réglage dynamique de l'angle de tangage pendant la conduite.

2. Véhicule (1; 201) selon la revendication 1, **caractérisé par le fait que** l'unité de direction (9; 209) est reliée de manière rigide au premier essieu de roue (5; 205).

3. Véhicule (1; 201) selon la revendication 1 ou 2, **caractérisé par le fait que** les deux roues (14) du premier essieu de roue (5; 205) sont orientables de la même manière par l'unité de direction (9 ; 209).

4. Véhicule (1; 201) selon l'une des revendications précédentes, **caractérisé par le fait que** le palier (67) pour supporter de façon tournante de l'unité de direction (9; 209) est formé d'un connecteur transversal (35) qui permet une rotation de l'unité de direction (9; 209) autour de l'axe de tangage et une rotation de l'unité de direction (9; 209) autour de l'axe de direction (8 ; 208).

5. Véhicule (1; 201) selon l'une des revendications 1 à 3, **caractérisé par le fait que** le palier (67) pour supporter de façon tournante de l'unité de direction (9; 209) est formé par deux connecteurs transversaux (35, 68) qui sont montés de manière rotative l'un par rapport à l'autre et qui permettent une rotation de l'unité de direction (9; 209) autour de l'axe de direction (8; 208).

6. Véhicule (1; 201) selon l'une des revendications précédentes, **caractérisé par le fait que** des moyens électroniques sont prévus pour régler l'angle d'inclinaison (18), lesquels moyens comprennent des capteurs pour détecter l'état du véhicule et des moyens de traitement de signal pour générer un signal de commande afin de régler l'angle d'inclinaison (18) de l'axe de direction (8; 208) en fonction des données fournies par les capteurs.

7. Véhicule (1; 201) selon la revendication 6, **caractérisé par le fait que** d'autres actionneurs mécaniques, hydrauliques, pneumatiques ou électromécaniques (36) sont prévus pour régler l'angle de tangage (18).

8. Véhicule (1; 201) selon l'une des revendications précédentes, **caractérisé par le fait qu'**il est prévu des moyens mécaniques pour régler l'angle d'inclinaison (18), qui comprennent au moins une pédale (50), une poignée (48) ou un autre actionneur mécanique (41; 44; 47) actionné à la main ou au pied, dont le changement de position provoque une modification de l'angle d'inclinaison (18) de l'axe de direction (8; 208).

9. Véhicule (1; 201) selon l'une des revendications précédentes, **caractérisé par** des dispositifs dont l'objectif est de fixer l'angle d'inclinaison réglé (18).

10. Véhicule (1; 201) selon l'une des revendications précédentes, **caractérisé par** une conduite (51; 151) et un accumulateur d'énergie (65) pour alimenter la conduite (51; 151) en énergie.

11. Véhicule (1; 201) selon l'une des revendications précédentes, **caractérisé par le fait que** la structure porteuse (2; 202) est formé de tubes.

12. Véhicule (1; 201) selon l'une des revendications précédentes, **caractérisé par** des sièges (52), des repose-dos (53), des poignées (48), des porte-bagages (60), des pièces de garniture (63) et/ou d'autres composants (54, 61, 62) qui sont prévus dans la structure porteuse (2; 202).

13. Véhicule (1; 201) selon l'une des revendications précédentes, **caractérisé par le fait que** l'unité de direction (9; 209) peut être actionnée avec les pieds (40, 42, 43) du conducteur (11).

14. Véhicule (201) selon l'une des revendications précédentes, **caractérisé par** une autre unité de direction (209 ') pour diriger le deuxième essieu de roue (206).

15. Véhicule (101), contenant
(a) une carrosserie autoportante, c'est-à-dire une carrosserie avec un châssis ou une autre structure porteuse (2; 202), avec l'axe longitudinal du véhicule (21) dirigé dans le sens du déplacement (16);
(b) un premier (105) et un deuxième essieu de roue (106), au moins l'un des essieux de roues (105, 106) comportant deux roues (114);
(c) une unité de direction (109) pouvant roter autour de l'axe de direction (108) pour diriger le véhicule (101), qui est reliée au deuxième essieu de roue (106), l'axe de direction (108) étant incliné dans un plan (17) perpendiculaire au deuxième essieu de roue (106) d'un angle d'inclinaison (118) par rapport à la verticale, lequel angle est différent zéro et inférieur à 90°; dans laquelle
(d) l'axe de direction (108) est dirigé au-dessus du deuxième essieu de roue (106) dans le plan (17) perpendiculaire au deuxième essieu de roue (106) dans un sens s'éloignant du véhicule (101); dans laquelle
(e) la structure porteuse (102) est reliée de manière rotative autour de l'axe de direction (108) à l'unité de direction (109); dans laquelle
(f) la structure porteuse (102) et l'unité de direction (109) sont conçues de telle manière qu'un conducteur (11) supporté par la structure porteuse (102) puisse exercer un couple sur l'unité de direction (109); dans laquelle
(g) le deuxième essieu de roue (106) est l'essieu de roue arrière (106) et comporte deux roues (114);
**caractérisé par**
(h) un palier (67) pour supporter de façon tournante de l'unité de direction (109), avec un axe de tangage (34) s'étendant parallèlement à l'essieu de roue arrière (106), de sorte que l'axe de direction (108) et l'axe vertical situé dans le plan (17) perpendiculaire à l'essieu de roue arrière (106) forment l'angle de tangage (118),
(i) des moyens électroniques et / ou mécaniques et / ou hydrauliques pour le réglage dynamique de l'angle de tangage pendant la conduite, et
(j) une liaison mécanique entre des éléments de réception de force (44) par le biais d'éléments de transmission (47) à l'unité de direction (109) située à l'arrière, laquelle liaison relie une zone de commande pour pied (40, 42, 43) du conducteur (11) à l'unité de direction (109) de telle sorte que l'ajustement de l'unité de direction (109) se fait par rapport à la carrosserie (102).
